# EUROPÄISCHE PATENTANMELDUNG

(11) **EP 2 052 615 A1**
(43) Veröffentlichungstag der Anmeldung: **29.04.2009**
(21) Anmeldenummer: 07020858.2
(22) Anmeldetag: 24.10.2007
(51) Int. Cl.: A01N 47/36, A01N 47/38, A01N 43/82, A01N 43/80, A01N 43/653, A01N 43/56, A01N 43/50, A01P 13/02

(54) **Herbizid-Kombination**

(71) Anmelder: Bayer CropScience AG, 40789 Monheim (DE)
(72) Erfinder: Hacker, Erwin, Dr., 65239 Hochheim (DE); Woldraff, Christian, Dr., 61118 Bad Vilbel (DE); Schreiber, Dominique, 60596 Frankfurt (DE); Hills, Martin, 65510 Idstein (DE); Feucht, Dieter, Dr., 65760 Eschborn (DE); Müller, Klaus-Helmut, Dr., 40593 Düsseldorf (DE); Gesing, R. F. Ernst, Dr., 40699 Erkrath-Hochdahl (DE); Bonfig-Picard, Georg, Dr., 63517 Rodenbach (DE)

(57) **Zusammenfassung**

Die vorliegende Erfindung betrifft eine Herbizid-Kombination, enthaltend Komponenten (A) und (B), wobei
(A) ein oder mehrere Herbizide aus der Gruppe bestehend aus dem 2-Iodo-N-[(4-methoxy-6-methyl-1,3,5-triazin-2-yl)carbamoyl]benzolsulfonamid und Verbindungen der allgemeinen Formel (I) 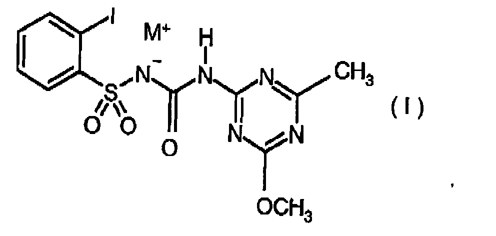 wobei
das Kation (M⁺)

(a) ein Ion der Alkalimetalle, bevorzugt Lithium, Natrium, Kalium, oder
(b) ein Ion der Erdalkalimetalle, bevorzugt Calcium und Magnesium, oder
(c) ein Ion der Übergangsmetalle, bevorzugt Mangan, Kupfer, Zink und Eisen, oder
(d) ein Ammonium-Ion, bei dem gegebenenfalls ein, zwei, drei oder alle vier Wasserstoffatome, durch gleiche order verschiedene Reste aus der Gruppe (C₁-C₄)-Alkyl, Hydroxy-(C₁-C₄)-Alkyl, (C₃-C₆)-Cycloalkyl, (C₁-C₄)-Alkoxy-(C₁-C₄)-alkyl, Hydroxy-(C₁-C₄)-alkoxy-(C₁-C₄)-alkyl, (C₁-C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₆)-Alkyl, (C₁-C₆)-Haloalkyl, (C₃-C₆)-Cycloalkyl, (C₁-C₆)-Alkoxy, (C₁-C₆)-Haloalkoxy und Phenyl substituiert sind, und wobei jeweils zwei Substituenten am N-Atom zusammen gegebenfalls einen unsubstituierten oder substituierten Ring bilden, oder
(e) ein Phosphonium-Ion, oder
(f) ein Sulfonium-Ion, bevorzugt Tri-((C₁-C₄)-alkyl)-sulfonium, oder
(g) ein Oxonium-Ion, bevorzugt Tri-((C₁-C₄)-alkyl)-oxonium, oder
(h) eine gegebenenfalls einfach oder mehrfach annellierte und/oder durch (C₁-C₄)-Alkyl substituierte gesättigte oder ungesättigte/aromatische N-haltige heterocyclische ionische Verbindung mit 1-10 C-Atomen im Ringsystem
ist.
bedeutet, und
(B) ein oder mehrere Herbizide aus der Gruppe der Azole bestehend aus:
benzofenap, pyrazolynate, pyrazoxyfen, pyroxasulfone, topramezone, pyarasulfutole, NC-310, 3-(3-chloro-5-{1-methyl-3-(trifluormethyl)-1H-pyrazol-5-yl]oxy}phenoxy)-1-methyl-5-(trifluormethyl)-1H-pyrazole, 3-(3-iodo-5-{1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-mthyl-3-(trifluormethyl)-1H-pyrazol-5-yl]oxy}phenoxy)-5-(trifluormethyl)-1 H-pyrazole, pyraflufen-ethyl, fluazolate, isouron, isoxaben, isoxaflutole, imazamethabenzmethyl, imazamox, imazapic, imazapyr, imazaquin, imazethapyr, methazole, oxadiargyl, oxadiazon, amicarbazone, carfentrazene-ethyl, sulfentrazonel, bencarbazone, amitrole, paclobutrazol, uniconazole, cafenstrole, fentrazamide und F-5231

bedeutet.

## Beschreibung

Herbizid-Kombination enthaltend 2-Iodo-N-[(4-methoxy-6-methy-1,3,5-triazin-2-yl)carbamoyl]benzolsulfonamids und/oder dessen Salze und herbizide Wirkstoffe aus der Gruppe der Azole.

Die vorliegende Erfindung liegt auf dem technischen Gebiet der Pflanzenschutzmittel, die gegen unerwünschten Pflanzenwuchs, z.B. im Vorsaatverfahren (mit oder ohne Einarbeitung), im Vorauflauf oder im Nachauflauf in Kulturpflanzen wie beispielsweise in Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Raps, Kartoffel und Hirse (Sorghum), Flachs, Weidegras und Grün-/Rasenflächen eingesetzt werden. Im Besonderen betrifft die Erfindung eine Herbizid-Kombination, enthaltend mindestens zwei Herbizide und deren Anwendung zur Bekämpfung unerwünschten Pflanzenwuchses.

Es ist bekannt, dass substituierte Phenylsulfonylharnstoffe, herbizide Eigenschaften aufweisen. Dabei handelt es sich z.B. um Phenylderivate, die einfach oder mehrfach substituiert sind (z.B. US 4127405, WO 9209608, BE 853374, WO 9213845, EP 84020, WO 9406778, WO 02072560, US 4169719, US4629494, DE 4038430).

Es ist weiter bekannt, dass bestimmte N-(1,3,5-Triazin-2-yl-aminocarbonyl)-arylsulfonamide herbizide Eigenschaften aufweisen (vgl. DE 27 15 786). Die Herbizidwirkung dieser Verbindungen ist jedoch nicht in allen Belangen, wie beispielsweise Verträglichkeit, Wirkungsspektrum, Bekämpfung toleranter oder resistenter Arten, Verhalten gegenüber Folgekulturen oder Anwendungsflexibilität, zufriedenstellend.

Die herbizide Wirksamkeit der N-(1,3,5-Triazin-2-yl-aminocarbonyl)-arylsulfonamide gegen Schadpflanzen liegt bereits auf einem hohen Niveau, hängt jedoch im allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z.B. weil damit die Selektivität der Herbizide reduziert wird oder eine Wirkungsverbesserung auch bei höherer Aufwandmenge nicht eintritt.

Die Aufgabe der vorliegenden Erfindung bestand darin, ein verbessertes Pflanzenschutzmittel zur Verfügung zu stellen.

Überraschenderweise wurde nun gefunden, dass diese Aufgabe durch Verwendung des 2-Iodo-N-[(4-methoxy-6-methyl-1,3,5-triazin-2-yl)carbamoyl]benzolsulfonamids und/oder dessen Salze in Kombination mit sich von diesen strukturell unterscheidenden Herbiziden aus der Gruppe der Azole gelöst werden kann, die in besonders günstiger Weise zusammenwirken, z.B. wenn sie zur Bekämpfung von unerwünschtem Pflanzenwuchs in Kulturpflanzen wie Weizen (Hart- und Weichweizen), Mais, Soja, Zuckerrübe, Zuckerrohr, Baumwolle, Reis, Bohnen (wie beispielsweise Buschbohne und Pferdebohne), Flachs, Gerste, Hafer, Roggen, Triticale, Raps, Kartoffel und Hirse (Sorghum), Flachs, Weideland und Grün-/Rasenflächen eingesetzt werden.

Verbindungen aus der Gruppe der Azole, sind bereits als herbizide Wirkstoffe für die Bekämpfung von unerwünschtem Pflanzenwachstum bekannt; siehe hierzu beispielsweise JP 57072903, GB 1463473, US 4230481, WO 2002062770, EP 958291, WO 2001074785, GB 2122188, WO 2006103003, EP 361114, WO 09206962, DE 2436179, US 4636243, EP 527036, US 4188487, EP 254951, EP 41624, EP 41623, US 4798619, DE 2227012, GB 1110500, DE 3839206, WO 09002120, WO 08703782, DE 19500439, US 2670282, US 1595697, US 4203995, US 5147445, EP 612735, WO 08703873 und die in den zuvor genannten Druckschriften zitierte Literatur.

Gegenstand der vorliegenden Erfindung ist somit eine Herbizid-Kombination enthaltend Herbizide aus (A) und Herbizide aus (B), wobei
(A) ein oder mehrere Herbizide aus der Gruppe bestehend aus dem 2-Iodo-N-[(4-methoxy-6-methyl-1,3,5-triazin-2-yl)carbamoyl]benzolsulfonamid und Verbindungen der allgemeinen Formel (I) 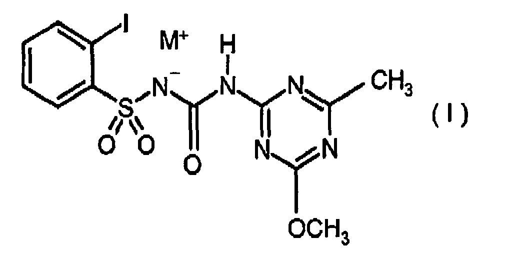 wobei
   das Kation (M⁺)
   (a) ein Ion der Alkalimetalle, bevorzugt Lithium, Natrium, Kalium, oder
   (b) ein Ion der Erdalkalimetalle, bevorzugt Calcium und Magnesium, oder
   (c) ein Ion der Übergangsmetalle, bevorzugt Mangan, Kupfer, Zink und Eisen, oder
   (d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-Alkyl, (C₃-C₆)-Cycloalkyl, (C₁-C₄)-Alkoxy-(C₁-C₄)-alkyl, Hydroxy-(C₁-C₄)-alkoxy-(C₁-C₄)-alkyl, (C₁-C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₆)-Alkyl, (C₁-C₆)-Haloalkyl, (C₃-C₆)-Cycloalkyl, (C₁-C₆)Alkoxy, (C₁-C₆)-Haroalkoxy und Phenyl substituiert sind, und wobei jeweils zwei Substituenten am N-Atom zusammen gegebenfalls einen unsubstituierten oder substituierten Ring bilden, oder
   (e) ein Phosphonium-Ion, oder
   (f) ein Sulfonium-Ion, bevorzugt Tri-((C₁-C₄)-alkyl)-sulfonium, oder
   (g) ein Oxonium-Ion, bevorzugt Tri-((C₁-C₄)-alkyl)-oxonium, oder (h) eine gegebenenfalls einfach oder mehrfach annellierte und/oder durch (C₁-C₄)-Alkyl substituierte gesättigte oder ungesättigte/aromatische N-haltige heterocyclische ionische Verbindung mit 1-10 C-Atomen im Ringsystem
      ist.
   bedeutet, und
(B) ein oder mehrere Herbizide aus der Gruppe der Azole bestehend aus:
   der Untergruppe der Azole (Untergruppe 1), bestehend aus:
      benzofenap [CAS RN 82692-44-2] (= B1-1); pyrazolynate [CAS RN 58011-68-0] (= B1-2); pyrazoxyfen [CAS RN 71561-11-0] (= B1-3);
      pyroxasulfone [CAS RN 447399-55-5] (= B1-4); topramezone [CAS RN 210631-68-8] (= B1-5); pyrasulfotole [CAS RN 365400-11-9] (= B1-6); NC-310 [CAS RN 89275-30-9] (= B1-7); 3-(3-chloro-5-{[1-methyl-3-(trifluormethyl)-1H-pyrazol-5-yl]oxy}phenoxy)-1-methyl-5-(trifluormethyl)-1H-pyrazole [CAS RN 911320-30-4] (= B1-8); 3-(3-iodo-5-{[1-methyl-3-(trifluormethyl)-1H-pyrazol-5-yl]oxy}phenoxy)-1-methyl-5-(trifluormethyl)-1H-pyrazole [CAS RN 911320-32-6] (= B1-9); 1-ethyl-3-(3-fluoro-5-{[1-methyl-3-(trifluormethyl)-1 H-pyrazol-5-yl]oxy}phenoxy)-5-(trifluormethyl)-1H-pyrazole [CAS RN 911320-33-7] (= B1-10);
   der Untergruppe der Phenylpyrazole (Untergruppe 2), bestehend aus:
      pyraflufen-ethyl [CAS RN 129630-19-9] (= B2-1); fluazolate [CAS RN 174514-07-9] (= B2-2);
   der Untergruppe der Isoxazole (Untergruppe 3), bestehend aus:
      isouron [CAS RN 55861-78-4] (= B3-1); isoxaben [CAS RN 911320-30-4] (= B3-2); isoxaflutole [CAS RN 141112-29-0] (= B3-3);
   der Untergruppe der Imidazolinone (Untergruppe 4) bestehend aus:
      imazamethabenzmethyl [CAS RN 81405-85-8] (= B4-1); imazamox [CAS RN 114311-32-9] (= B4-2); imazapic [CAS RN 104098-48-8] (= B4-3);
      imazapyr [CAS RN 81334-34-1] (= B4-4); imazaquin [CAS RN 81335-37-7] (= B4-5); imazethapyr [CAS RN 81335-77-5] (= B4-6);
   der Untergruppe der Oxadiazolone (Untegruppe 5), bestehend aus:
      methazole [CAS RN 20354-26-1] (= B5-1); oxadiargyl [CAS RN 39807-15-3] (= B5-2); oxadiazon [CAS RN 19666-30-9] (= B5-3);
   der Untergruppe der Triazolinine (Untergruppe 6), bestehend aus:
      amicarbazone [CAS RN 129909-90-6] (= B6-1); carfentrazone-ethyl [CAS RN 128639-02-1] (= B6-2); sulfentrazone [CAS RN 122836-35-5] (= B6-3); bencarbazone [CAS RN 173980-17-1] (= B6-4);
   der Untergruppe der Triazole (Untergruppe 7), bestehend aus:
      amitrole [CAS RN 76738-62-0] (= B7-1); paclobutrazol [CAS RN 76738-62-0] (= B7-2); uniconazole [CAS RN 83657-22-1] (= B7-3); cafenstrole [CAS RN 125306-83-4] (= B7-4);
   der Untergruppe der Tetrazolinone(Untergruppe 8), bestehend aus:
      fentrazamide [CAS RN 158237-07-1] (= B8-1);
      F-5231 [CAS RN 112190-78-0] (= B8-2);
      bedeutet.

Die hinter den unter der Gruppe B genannten Bezeichnungen (Common name) in eckigen Klammern aufgeführte "CAS RN" entspricht der "Chemical Abstract Service Registry Number", einer allgemein gebräuchlichen Referenznummer, die eine eindeutige Zuordnung der bezeichneten Substanzen ermöglicht, da die "CAS RN" u.a. zwischen Isomeren, einschließlich Stereoisomeren, unterscheidet.

Als Herbizid (A) bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺)
(a) ein Ion der Alkalimetalle, bevorzugt Lithium, Natrium, Kalium, oder
(b) ein Ion der Erdalkalimetalle, bevorzugt Calcium und Magnesium, oder
(c) ein Ion der Übergangsmetalle, bevorzugt Mangan, Kupfer, Zink und Eisen, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-Alkyl, (C₃-C₄)-Cycloalkyl, (C₁-C₂)-Alkoxy-(C₁-C₂)-alkyl, Hydroxy-(C₁-C₂)-alkoxy-(C₁-C₂)-alkyl, (C₁-C₂)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₂)-Alkyl, (C₁-C₂)Haloalkyl, (C₃-C₄)-Cycloalkyl, (C₁-C₂)-Alkoxy, (C₁-C₂)-Haloalkoxy und Phenyl substituiert sind und wobei jeweils zwei Substituenten am N-Atom zusammen gegebenfalls einen unsubstituierten oder substituierten Ring bilden, oder
(e) ein quartäres Phosphonium-Ion, bevorzugt Tetra-((C₁-C₄)-alkyl)-phosphonium und Tetraphenyl-phosponium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(f) ein tertiäres Sulfonium-Ion, bevorzugt Tri-((C₁-C₄)-alkyl)-sulfonium oder Triphenyl-sulfonium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(g) ein tertiäres Oxonium-Ion, bevorzugt Tri-((C₁-C₄)-alkyl)-oxonium, wobei die (C₁-C₄)-Alkylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(h) ein Kation aus der Reihe der folgenden heterocyclischen Verbindungen, wie beispielsweise Pyridin, Chinolin, 2-Methylpyridin, 3-Methylpyridin, 4-Methylpyridin, 2,4-Dimethylpyridin, 2,5-Dimethylpyridin, 2,8-Dimethylpyridin, 5-Ethyl-2-methylpyridin, Piperidin, Pyrrolidin, Morpholin, Thiomorpholin, Pyrrol, Imidazol, 1,5-Diazabicyclo[4.3.0]non-5-en (DBN), 1,8-Diazabicyclo[5.4.0]undec-7-en (DBU)
   ist.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Beispiele für als Herbizid (A) bevorzugt verwendete Verbindungen sind das 2-lodo-N-[(4-methoxy-6-methyl-1,3,5-triazin-2-yl)carbamoyl]benzolsulfonamid (A-0) und die in der nachfolgenden Tabelle A genannten Verbindungen der Formel (I) (d.h. der Verbindungen (A-1 bis A-35)).

**Tabelle A: Verbindungen der allgemeinen Formel (I), wobei durch M⁺ das jeweilige Salz der bezeichnet ist**

| | |
|---|---|
| 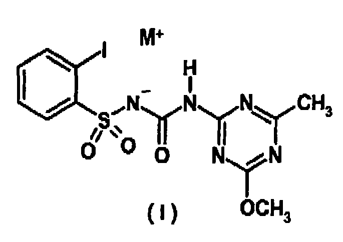 | |

| Verbindung | M⁺ |
|---|---|
| A-1 | Lithium |
| A-2 | Natrium |
| A-3 | Kalium |
| A-4 | Magnesium |
| A-5 | Calcium |
| A-6 | Ammonium |
| A-7 | Methylammonium |
| A-8 | Dimethylammonium |
| A-9 | Tetramethylammonium |
| A-11 | Ethylammonium |
| A-11 | Diethylammonium |
| A-12 | Tetraethylammonium |
| A-13 | Propylammonium |
| A-14 | Tetrapropylammonium |
| A-15 | Isopropylammonium |
| A-18 | Diisopropylammonium |
| A-17 | Butylammonium |
| A-18 | Tetrabutylammonium |
| A-19 | (2-Hydroxyeth-1-yl)ammonium |
| A-20 | Bis-N,N-(2-hydroxyeth-1-yl)ammonium |
| A-21 | Tris-N,N,N-(2-hydroxyeth-1-yl)ammonium |
| A-22 | 1-Phenylethylammonium |
| A-23 | 2-Phenylethylammonium |
| A-24 | Trimethylsulfonium |
| A-25 | Trimethyloxonium |
| A-26 | Pyridinium |
| A-27 | 2-Methylpyridinium |
| A-28 | 4-Methylpyridinium |
| A-29 | 2,4-Dimethylpyridinium |
| A-30 | 2,6-Dimethylpyridinium |
| A-31 | Piperidinium |
| A-32 | Imidazolium |
| A-33 | Morpholinium |
| A-34 | 1,5-Diazabicyclo[4.3.0]non-7-enium |
| A-35 | 1,8-Diazabicyclo[5.4.0]undec-7-enium |

Als Herbizid (A) besonders bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺)
ein Natrium-Ion, ein Kalium-Ion, ein Lithium-Ion, ein Magnesium-Ion, ein Calcium-Ion, ein NH₄⁺-Ion, ein (2-Hydroxyeth-1-yl)ammonium-Ion, Bis-N,N-(2-hydroxyeth-1-yl)ammonium-Ion, Tris-N,N,N-(2-hydroxyeth-1-yl)ammonium-Ion, ein Methylammonium-Ion, ein Dimethylammonium-Ion, ein Trimethylammonium-Ion, ein Tetramethylammonium-Ion ein Ethylammonium-Ion, ein Diethylammonium-Ion, ein Triethylammonium-Ion, ein Tretraethylammonium-Ion ein Isopropylammonium-Ion, ein Diisopropylammonium-Ion, ein Tetrapropylammonium-Ion, ein Tetrabutylammonium-Ion, ein 2-(2-Hydroxyeth-1-oxy)eth-1-yl-ammonium-Ion, ein Di-(2-hydroxyeth-1-yl)-ammonium-Ion, ein Trimethylbenzylammonium-Ion, ein Tri-((C₁-C₄)-alkyl)-sulfonium-Ion, oder ein Tri-((C₁-C₄)-alkyl)-oxonium-Ion, ein Benzylammonium-Ion, ein 1-Phenylethylammonium-Ion, ein 2-Phenylethylammonium-Ion, ein Diisopropylethylammonium-Ion, ein Pyridinium-Ion, ein Piperidinium-Ion, ein Imidazolium-Ion, ein Morpholinium-Ion, ein 1,8-Diazabicyclo[5.4.0]undec-7-enium-Ion ist.

Is Herbizid (A) besonders bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺) ein Natrium-Ion, ein Kalium-Ion, ein Magnesium-Ion, ein Calcium-Ion, oder ein NH₄⁺-Ion ist.

Als Herbizid (A) ebenfalls besonders bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺), in denen das Kation (M⁺) ein Natrium-Ion, ein Kalium-Ion oder ein NH₄-Ion.

Als Herbizid (B) bevorzugte Verbindungen sind:
benzofenap [CAS RN 82692-44-2] (= B1-1); topramezone [CAS RN 210631-68-8] (= B1-5); pyrasulfotole [CAS RN 365400-11-9] (= B1-6); isoxaflutole [CAS RN 141112-29-0] (= B3-3); imazamox [CAS RN 114311-32-9] (= B4-2); imazethapyr [CAS RN 81335-77-5] (= B4-6); oxadiargyl [CAS RN 39807-15-3] (= B5-2); oxadiazon [CAS RN 19666-30-9] (= B5-3); amicarbazone [CAS RN 129909-90-6] (= B6-1); carfentrazone-ethyl [CAS RN 128639-02-1] (= B6-2); sulfentrazone[CAS RN 122836-35-5]; uniconazole [CAS RN 83657-22-1] (= B7-3); cafenstrole [CAS RN 125306-83-4] (= B7-4); fentrazamide [CAS RN 158237-07-1] (= B8-1); 3-(3-chloro-5-{[1-methyl-3-(trifluormethyl)-1H-pyrazol-5-yl]oxy}phenoxy)-1-methyl-5-(trifluormethyl)-1H-pyrazole [CAS RN 911320-30-4] (= B1-8); 3-(3-iodo-5-{[1-methyl-3-(trifluormethyl)-1H-pyrazol-5-yl]oxy}phenoxy)-1-methyl-5-(trifluormethyl)-1H-pyrazole [CAS RN 911320-32-6] (= B1-9); 1-ethyl-3-(3-fluoro-5-{[1-methyl-3-(trifluormethyl)-1H-pyrazol-5-yl]oxy}phenoxy)-5-(trifluormethyl)-1H-pyrazole [CAS RN 911320-33-7] (= B 1-10);

Als Herbizid (B) besonders bevorzugte Verbindungen sind:
pyarasulfotole [CAS RN 365400-11-9] (= B1-5); isoxaflutole [CAS RN 141112-29-0] (= B3-3); oxadiargyl [CAS RN 39807-15-3] (= B5-2); oxadiazon [CAS RN 19666-30-9] (= B5-3); amicarbazone [CAS RN 129909-90-6] (= B6-1); fentrazamide [CAS RN 158237-07-1] (= B8-1); 3-(3-chloro-5-{[1-methyl-3-(trifluormethyl)-1H-pyrazol-5-yl]oxy}phenoxy)-1-methyl-5-(trifluormethyl)-1H-pyrazole [CAS RN 911320-30-4] (= B1-8); 3-(3-iodo-5-{[1-methyl-3-(trifluormethyl)-1H-pyrazol-5-yl]oxy}phenoxy)-1-methyl-5-(trifluormethyl)-1H-pyrazole [CAS RN 911320-32-6] (= B1-9); 1-ethyl-3-(3-fluoro-5-{[1-methyl-3-(trifluormethyl)-1H-pyrazol-5-yl]oxy}phenoxy)-5-(trifluormethyl)-1H-pyrazole [CAS RN 911320-33-7] (= B1-10);

Die erfindungsgemäßen Herbizid-Kombinationen können zusätzliche weitere Komponenten enthalten, z. B. agrochemische Wirkstoffe anderer Art und/oder im Pflanzenschutz übliche Zusatzstoffe und/oder Formulierungshilfsmittel, oder zusammen mit diesen eingesetzt werden.

Die Herstellung von Salzen 2-Iodo-N-[(4-methoxy-6-methyl-1,3,5-triazin-2-yl)carbamoyl]benzolsulfonamids, insbesondere von Verbindungen der allgemeinen Fomel (I), ist nach dem Stand der Technik bekannt, vgl. hierzu auch die zeitgleich eingereichte europäische Patentanmeldung der Bayer CropScience AG mit dem Titel "Salze des 2-Iodo-N-[(4-methoxy-6-methyl-1,3,5-triazin-2-yl)carbamoyl]benzolsulfonamids, Verfahren zu deren Herstellung, sowie deren Verwendung als Herbizide und Pflanzenwachstumsregulatoren".

In bevorzugter Ausführungsform enthalten die erfindungsgemäßen Herbizid-Kombinationen die Herbizide (A) und (B) in einem wirksamen Gehalt und/oder weisen synergistische Wirkungen auf. Die synergistischen Wirkungen können z.B. bei gemeinsamer Ausbringung der Herbizide (A) und (B) beispielsweise als Co-Formulierung oder als Tank-Mischung beobachtet werden, sie können jedoch auch bei zeitlich versetzter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf Applikationen oder nach frühen Nachauflaufanwendungen, gefolgt von Applikationen im mittleren oder späten Nachauflauf. Bevorzugt ist dabei die gemeinsame oder die zeitnahe Anwendung der Herbizide (A) und (B) der jeweiligen Kombination.

Die synergistischen Effekte erlauben eine Reduktion der Aufwandmengen der Einzelherbizide, eine höhere Wirkungsstärke bei gleicher Aufwandmenge, die Kontrolle bislang nicht erfasster Arten (Lücken), die Kontrolle von Arten, die Toleranzen oder Resistenzen gegenüber einzelnen oder mehreren Herbiziden aufweisen, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus Herbiziden (A)+(B) synergistische Wirkungssteigerungen möglich, die weit und in unerwarteter Weise über die Wirkungen hinausgehen, die mit den Einzelherbiziden (A) und (B) erreicht werden.

Die genannte Formel (I) umfaßt alle Stereoisomeren und deren Gemische, insbesondere auch racemische Gemische, und - soweit Enantiomere möglich sind - das jeweils biologisch wirksame Enantiomere.

Die Herbizide der Gruppe (A) hemmen das Enzym Acetolactatsynthase (ALS) und damit die Proteinbiosynthese in Pflanzen. Die Aufwandmenge der Herbizide (A) kann in einem weiten Bereich variieren, beispielsweise zwischen 0,001 g und 1500 g AS/ha (AS/ha bedeutet dabei im folgenden "Aktivsubstanz pro Hektar" = bezogen auf 100%igen Wirkstoff). Bei Anwendungen mit Aufwandmengen von 0,001 g bis 1500 g AS/ha der Herbizide (A), vorzugsweise der Verbindungen A-0 bis A-35, wird im Vor- und Nachauflaufverfahren ein relativ breites Spektrum an Schadpflanzen bekämpft, z.B. an annuellen und perennierenden, mono- oder dikotylen Unkräutern sowie an unerwünschten Kulturpflanzen. Bei den erfindungsgemäßen Kombinationen liegen die Aufwandmengen in der Regel niedriger, z.B. im Bereich von 0,001 g bis 1000 g AS/ha, vorzugsweise 0,1 g bis 500 g AS/ha, besonders bevorzugt 0,5 g bis 250 g AS/ha.

Die Herbizide der Gruppe (B) beeinflussen beispielsweise die p-Hydroyphenypyruvate-dioxygenase, die Phytoen-desaturase, die Porphyrinogenoxidase, die Zellulosebiosynthese, die Acetohydroxyacid-synthase, das Photosystem II, die Lycopen-cyclase, die Gibberellinbiosynthese, die Zellteilung sowie die Synthese langkettiger Fettsäuren und eignen sich sowohl für einen Einsatz im Vorauflauf wie auch im Nachauflauf. Die Aufwandmenge der Herbizide (B) kann in einem weiten Bereich variieren, beispielsweise zwischen 0,01 g und 10000 g AS/ha (AS/ha bedeutet dabei im folgenden "Aktivsubstanz pro Hektar" = bezogen auf 100%igen Wirkstoff). Bei Anwendungen mit Aufwandmengen von 0,01 g bis 10000 g AS/ha der Herbizide (B), vorzugsweise der Verbindungen B(1-1) bis B(9-7), wird im Vor- und Nachauflaufverfahren ein relativ breites Spektrum an Schadpflanzen bekämpft, z.B. an annuellen und perennierenden, mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,001 g bis 5000 g AS/ha, vorzugsweise 0,05 g bis 3000 g AS/ha, besonders bevorzugt 0.1 g bis 2000 g AS/ha.

Bevorzugt sind Herbizid-Kombinationen aus einem oder mehreren Herbiziden (A) mit einem oder mehreren Herbiziden (B). Weiter bevorzugt sind Kombinationen von Herbiziden (A) mit einem oder mehreren Herbiziden (B) nach dem Schema:
(A.0) + (B1-1), (A-0) + (B1-2), (A-0) + (B8-2), (A-1) + (B1-1), (A-1) + (B1-2),
(A-1) + (B8-2), (A-35) + (B1-1), (A-35) + (B1-2), (A-35) + (B8-2).
Dabei sind auch solche Kombinationen erfindungsgemäß, die noch ein oder mehrere weitere von Herbiziden (A) und (B) verschiedene agrochemische Wirkstoffe, die ebenfalls die Funktion eines selektiven Herbizids aufweisen, enthalten,

Für Kombinationen mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind.

Bereiche für geeignete Mengenverhältnisse der Verbindungen (A) und (B) ergeben sich z.B. aus den genannten Aufwandmengen für die Einzelstoffe. In den erfindungsgemäßen Kombinationen können die Aufwandmengen in der Regel reduziert werden, Bevorzugte Mischungsverhältnisse (A):(B), für die erfindungsgemäßen Kombinationen sind im folgenden aufgeführt:
(A) : (B) = 1000 : 1 bis 1 : 20000, vorzugsweise 250 : 1 bis 1 : 5000,
besonders bevorzugt 150 :1 bis 1 : 2000.

Von besonderem Interesse ist die Anwendung von herbiziden Mitteln mit einem Gehalt an folgenden Verbindungen (A) + (B):
(A-0) + (B1-1), (A-0) + (B1-2), (A-0) + (B1-3), (A-0) + (B1-4), (A-0) + (B1-5),
(A-0) + (B1-6), (A-0) + (B1-7), (A-0) + (B1-8), (A-0) + (B1-9), (A-0) + (B1-10),
(A-0) + (B2-1), (A-0) + (B2-2), (A-0) + (B3-1), (A-0) + (B3-2), (A-0) + (B3-3),
(A-0) + (B4-1), (A-0) + (B4-2), (A-0) + (B4-3), (A-0) + (B4-4), (A-0) + (B4-5),
(A-0) + (B4-6), (A-0) + (B5-1), (A-0) + (B5-2), (A-0) + (B5-3), (A-0) + (B6-1),
(A-0) + (B6-2), (A-0) + (B6-3), (A-0) + (B6-4), (A-0) + (B7-1), (A-0) + (B7-2),
(A-0) + (B7-3), (A-0) + (B7-4), (A-0) + (B8-1), (A-0) + (B8-2);

(A-1) + (B1-1), (A-1) + (B1-2), (A-1) + (B1-3), (A-1) + (B1-4), (A-1) + (B1-5),
(A-1) + (B1-6), (A-1) + (B1-7), (A-1) + (B1-8), (A-1) + (B1-9), (A-1) + (B1-10),

(A-1) + (B2-1), (A-1) + (B2-2), (A-1) + (B3-1), (A-1) + (B3-2), (A-1) + (B3-3),
(A-1) + (B4-1), (A-1) + (B4-2), (A-1) + (B4-3), (A-1) + (B4-4), (A-1) + (B4-5),
(A-1) + (B4-6), (A-1) + (B5-1), (A-1) + (B5-2), (A-1) + (B5-3), (A-1) + (B6-1),
(A-1) + (B6-2), (A-1) + (B6-3), (A-1) + (B6-4), (A-1) + (B7-1), (A-1) + (B7-2),
(A-1) + (B7-3), (A-1) + (B7-4), (A-1) + (B8-1), (A-1) + (B8-2);

(A-2) + (B1-1), (A-2) + (B1-2), (A-2) + (B1-3), (A-2) + (B1-4), (A-2) + (B1-5),
(A-2) + (B1-6), (A-2) + (B1-7), (A-2) + (B1-8), (A-2) + (B1-9), (A-2) + (B1-10),
(A-2) + (B2-1), (A-2) + (B2-2), (A-2) + (B3-1), (A-2) + (B3-2), (A-2) + (B3-3),
(A-2) + (B4-1), (A-2) + (B4-2), (A-2) + (B4-3), (A-2) + (B4-4), (A-2) + (B4-5),
(A-2) + (B4-6), (A-2) + (B5-1), (A-2) + (B5-2), (A-2) + (B5-3), (A-2) + (B6-1),
(A-2) + (B6-2), (A-2) + (B6-3), (A-2) + (B6-4), (A-2) + (B7-1), (A-2) + (B7-2),
(A-2) + (B7-3), (A-2) + (B7-4), (A-2) + (B8-1), (A-2) + (B8-2);

(A-3) + (B1-1), (A-3) + (B1-2), (A-3) + (B1-3), (A-3) + (B1-4), (A-3) + (B1-5),
(A-3) + (B1-6), (A-3) + (B1-7), (A-3) + (B1-8), (A-3) + (B1-9), (A-3) + (B1-10),
(A-3) + (B2-1), (A-3) + (B2-2), (A-3) + (B3-1), (A-3) + (B3-2), (A-3) + (B3-3),
(A-3) + (B4-1), (A-3) + (B4-2), (A-3) + (B4-3), (A-3) + (B4-4), (A-3) + (B4-5),
(A-3) + (B4-6), (A-3) + (B5-1), (A-3) + (B5-2), (A-3) + (B5-3), (A-3) + (B6-1),
(A-3) + (B6-2), (A-3) + (B6-3), (A-3) + (B6-4), (A-3) + (B7-1), (A-3) + (B7-2),
(A-3) + (B7-3), (A-3) + (B7-4), (A-3) + (B8-1), (A-3) + (B8-2);

(A-4) + (B1-1), (A-4) + (B1-2), (A-4) + (B1-3), (A-4) + (B1-4), (A-4) + (B1-5),
(A-4) + (B1-6), (A-4) + (B1-7), (A-4) + (B1-8), (A-4) + (B1-9), (A-4) + (B1-10),
(A-4) + (B2-1), (A-4) + (B2-2), (A-4) + (B3-1), (A-4) + (B3-2), (A-4) + (B3-3),
(A-4) + (B4-1), (A-4) + (B4-2), (A-4) + (B4-3), (A-4) + (B4-4), (A-4) + (B4-5),
(A-4) + (B4-6), (A-4) + (B5-1), (A-4) + (B5-2), (A-4) + (B5-3), (A-4) + (B6-1),
(A-4) + (B6-2), (A-4) + (B6-3), (A-4) + (B6-4), (A-4) + (B7-1), (A-4) + (B7-2),
(A-4) + (B7-3), (A-4) + (B7-4), (A-4) + (B8-1), (A-4) + (B8-2);

(A-5) + (B1-1), (A-5) + (B1-2), (A-5) + (B1-3), (A-5) + (B1-4), (A-5) + (B1-5),
(A-5) + (B1-6), (A-5) + (B1-7), (A-5) + (B1-8), (A-5) + (B1-9), (A-5) + (B1-10),
(A-5) + (B2-1), (A-5) + (B2-2), (A-5) + (B3-1), (A-5) + (B3-2), (A-5) + (B3-3),
(A-5) + (B4-1), (A-5) + (B4-2), (A-5) + (B4-3), (A-5) + (B4-4), (A-5) + (B4-5),
(A-5) + (B4-6), (A-5) + (B5-1), (A-5) + (B5-2), (A-5) + (B5-3), (A-5) + (B6-1),
(A-5) + (B6-2), (A-5) + (B6-3), (A-5) + (B6-4), (A-5) + (B7-1), (A-5) + (B7-2),
(A-5) + (B7-3), (A-5) + (B7-4), (A-5) + (B8-1), (A-5) + (B8-2);

(A-6) + (B1-1), (A-6) + (B1-2), (A-6) + (B1-3), (A-6) + (B1-4), (A-6) + (B1-5),
(A-6) + (B1-6), (A-6) + (B1-7), (A-6) + (B1-8), (A-6) + (B1-9), (A-6) + (B1-10),
(A-6) + (B2-1), (A-6) + (B2-2), (A-6) + (B3-1), (A-6) + (B3-2), (A-6) + (B3-3),
(A-6) + (B4-1), (A-6) + (B4-2), (A-6) + (B4-3), (A-6) + (B4-4), (A-6) + (B4-5),
(A-6) + (B4-6), (A-6) + (B5-1), (A-6) + (B5-2), (A-6) + (B5-3), (A-6) + (B6-1),
(A-6) + (B6-2), (A-6) + (B6-3), (A-6) + (B6-4), (A-6) + (B7-1), (A-6) + (B7-2),
(A-6) + (B7-3), (A-6) + (B7-4), (A-6) + (B8-1), (A-6) + (B8-2);

(A-7) + (B1-1), (A-7) + (B1-2), (A-7) + (B1-3), (A-7) + (B1-4), (A-7) + (B1-5),
(A-7) + (B1-6), (A-7) + (B1-7), (A-7) + (B1-8), (A-7) + (B1-9), (A-7) + (B1-10),
(A-7) + (B2-1), (A-7) + (B2-2), (A-7) + (B3-1), (A-7) + (B3-2), (A-7) + (B3-3),
(A-7) + (B4-1), (A-7) + (B4-2), (A-7) + (B4-3), (A-7) + (B4-4), (A-7) + (B4-5),
(A-7) + (B4-6), (A-7) + (B5-1), (A-7) + (B5-2), (A-7) + (B5-3), (A-7) + (B6-1),
(A-7) + (B6-2), (A-7) + (B6-3), (A-7) + (B6-4), (A-7) + (B7-1), (A-7) + (B7-2),
(A-7) + (B7-3), (A-7) + (B7-4), (A-7) + (B8-1), (A-7) + (B8-2);

(A-9) + (B1-1), (A-9) + (B1-2), (A-9) + (B1-3), (A-9) + (B1-4), (A-9) + (B1-5),
(A-9) + (B1-6), (A-9) + (B1-7), (A-9) + (B1-8), (A-9) + (B1-9), (A-9) + (B1-10),
(A-9) + (B2-1), (A-9) + (B2-2), (A-9) + (B3-1), (A-9) + (B3-2), (A-9) + (B3-3),
(A-9) + (B4-1), (A-9) + (B4-2), (A-9) + (B4-3), (A-9) + (B4-4), (A-9) + (B4-5),
(A-9) + (B4-6), (A-9) + (B5-1), (A-9) + (B5-2), (A-9) + (B5-3), (A-9) + (B6-1),
(A-9) + (B6-2), (A-9) + (B6-3), (A-9) + (B6-4), (A-9) + (B7-1), (A-9) + (B7-2),
(A-9) + (B7-3), (A-9) + (B7-4), (A-9) + (B8-1), (A-9) + (B8-2);

(A-10) + (B1-1), (A-10) + (B1-2), (A-10) + (B1-3), (A-10) + (B1-4), (A-10) + (B1-5),
(A-10) + (B1-6), (A-10) + (B1-7), (A-10) + (B1-8), (A-10) + (B1-9), (A-10) + (B1-10),
(A-10) + (B2-1), (A-10) + (B2-2), (A-10) + (B3-1), (A-10) + (B3-2), (A-10) + (B3-3),
(A-10) + (B4-1), (A-10) + (B4-2), (A-10) + (B4-3), (A-10) + (B4-4), (A-10) + (B4-5),
(A-10) + (B4-6), (A-10) + (B5-1), (A-10) + (B5-2), (A-10) + (B5-3), (A-10) + (B6-1),
(A-10) + (B6-2), (A-10) + (B6-3), (A-10) + (B6-4), (A-10) + (B7-1), (A-10) + (B7-2),
(A-10) + (B7-3), (A-10) + (B7-4), (A-10) + (B8-1), (A-10) + (B8-2);

(A-11) + (B1-1), (A-11) + (B1-2), (A-11) + (B1-3), (A-11) + (B1-4), (A-11) + (B1-5),
(A-11) + (B1-6), (A-11) + (B1-7), (A-11) + (B1-8), (A-11) + (B1-9), (A-11) + (B1-10),
(A-11) + (B2-1), (A-11) + (B2-2), (A-11) + (B3-1), (A-11) + (B3-2), (A-11) + (B3-3),
(A-11) + (B4-1), (A-11) + (B4-2), (A-11) + (B4-3), (A-11) + (B4-4), (A-11) + (B4-5),
(A-11) + (B4-6), (A-11) + (B5-1), (A-11) + (B5-2), (A-11) + (B5-3), (A-11) + (B6-1),
(A-11) + (B6-2), (A-11) + (B6-3), (A-11) + (B6-4), (A-11) + (B7-1), (A-11) + (B7-2),
(A-11) + (B7-3), (A-11) + (B7-4), (A-11) + (B8-1), (A-11) + (B8-2);

(A-12) + (B1-1), (A-12) + (B1-2), (A-12) + (B1-3), (A-12) + (B1-4), (A-12) + (B1-5),
(A-12) + (B1-6), (A-12) + (B1-7), (A-12) + (B1-8), (A-12) + (B1-9), (A-12) + (B1-10),
(A-12) + (B2-1), (A-12) + (B2-2), (A-12) + (B3-1), (A-12) + (B3-2), (A-12) + (B3-3).
(A-12) + (B4-1), (A-12) + (B4-2), (A-12) + (B4-3), (A-12) + (B4-4), (A-12) + (B4-5),
(A-12) + (B4-6), (A-12) + (B5-1), (A-12) + (B5-2), (A-12) + (B5-3), (A-12) + (B6-1),
(A-12) + (B6-2), (A-12) + (B6-3), (A-12) + (B6-4), (A-12) + (B7-1), (A-12) + (B7-2),
(A-12) + (B7-3), (A-12) + (B7-4), (A-12) + (B8-1), (A-12) + (B8-2);

(A-13) + (B1-1), (A-13) + (B1-2), (A-13) + (B1-3), (A-13) + (B1-4), (A-13) + (B1-5),
(A-13) + (B1-6), (A-13) + (B1-7), (A-13) + (B1-8), (A-13) + (B1-9), (A-13) + (B1-10),
(A-13) + (B2-1), (A-13) + (B2-2), (A-13) + (B3-1), (A-13) + (B3-2), (A-13) + (B3-3),
(A-13) + (B4-1), (A-13) + (B4-2), (A-13) + (B4-3), (A-13) + (B4-4), (A-13) + (B4-5),
(A-13) + (B4-6), (A-13) + (B5-1), (A-13) + (B5-2), (A-13) + (B5-3), (A-13) + (B6-1),
(A-13) + (B6-2), (A-13) + (B6-3), (A-13) + (B6-4), (A-13) + (B7-1), (A-13) + (B7-2),
(A-13) + (B7-3), (A-13) + (B7-4), (A-13) + (B8-1), (A-13) + (B8-2);

(A-14) + (B1-1), (A-14) + (B1-2), (A-14) + (B1-3), (A-14) + (B1-4), (A-14) + (B1-5),
(A-14) + (B1-6), (A-14) + (B1-7), (A-14) + (B1-8), (A-14) + (B1-9), (A-14) + (B1-10),
(A-14) + (B2-1), (A-14) + (B2-2), (A-14) + (B3-1), (A-14) + (B3-2), (A-14) + (B3-3),
(A-14) + (B4-1), (A-14) + (B4-2), (A-14) + (B4-3), (A-14) + (B4-4), (A-14) + (B4-5),
(A-14) + (B4-6), (A-14) + (B5-1), (A-14) + (B5-2), (A-14) + (B5-3), (A-14) + (B6-1),
(A-14) + (B6-2), (A-14) + (B6-3), (A-14) + (B6-4), (A-14) + (B7-1), (A-14) + (B7-2),
(A-14) + (B7-3), (A-14) + (B7-4), (A-14) + (B8-1), (A-14) + (B8-2);

(A-15) + (B1-1), (A-15) + (B1-2), (A-15) + (B1-3), (A-15) + (B1-4), (A-15) + (B1-5),
(A-15) + (B1-6), (A-15) + (B1-7), (A-15) + (B1-8), (A-15) + (B1-9), (A-15) + (B1-10),
(A-15) + (B2-1), (A-15) + (B2-2), (A-15) + (B3-1), (A-15) + (B3-2), (A-15) + (B3-3),
(A-15) + (B4-1), (A-15) + (B4-2), (A-15) + (B4-3), (A-15) + (B4-4), (A-15) + (B4-5),
(A-15) + (B4-6), (A-15) + (B5-1), (A-15) + (B5-2), (A-15) + (B5-3), (A-15) + (B6-1),
(A-15) + (B6-2), (A-15) + (B6-3), (A-15) + (B6-4), (A-15) + (B7-1), (A-15) + (B7-2),
(A-15) + (B7-3), (A-15) + (B7-4), (A-15) + (B8-1), (A-15) + (B8-2);

(A-16) + (B1-1), (A-16) + (B1-2), (A-16) + (B1-3), (A-16) + (B1-4), (A-16) + (B1-5),
(A-16) + (B1-6), (A-16) + (B1-7), (A-16) + (B1-8), (A-16) + (B1-9), (A-16) + (B1-10),
(A-16) + (B2-1), (A-16) + (B2-2), (A-16) + (B3-1), (A-16) + (B3-2), (A-16) + (B3-3),
(A-16) + (B4-1), (A-16) + (B4-2), (A-16) + (B4-3), (A-16) + (B4-4), (A-16) + (B4-5),
(A-16) + (B4-6), (A-16) + (B5-1), (A-16) + (B5-2), (A-16) + (B5-3), (A-16) + (B6-1),
(A-16) + (B6-2), (A-16) + (B6-3), (A-16) + (B6-4), (A-16) + (B7-1), (A-16) + (B7-2),
(A-16) + (B7-3), (A-16) + (B7-4), (A-16) + (B8-1), (A-16) + (B8-2);

(A-17) + (B1-1), (A-17) + (B1-2), (A-17) + (B1-3), (A-17) + (B1-4), (A-17) + (B1-5),
(A-17) + (B1-6), (A-17) + (B1-7), (A-17) + (B1-8), (A-17) + (B1-9), (A-17) + (B1-10),
(A-17) + (B2-1), (A-17) + (B2-2), (A-17) + (B3-1), (A-17) + (B3-2), (A-17) + (B3-3),
(A-17) + (B4-1), (A-17) + (B4-2), (A-17) + (B4-3), (A-17) + (B4-4), (A-17) + (B4-5),
(A-17) + (B4-6), (A-17) + (B5-1), (A-17) + (B5-2), (A-17) + (B5-3), (A-17) + (B6-1),
(A-17) + (B6-2), (A-17) + (B6-3), (A-17) + (B6-4), (A-17) + (B7-1), (A-17) + (B7-2),
(A-17) + (B7-3), (A-17) + (B7-4), (A-17) + (B8-1), (A-17) + (B8-2);

(A-18) + (B1-1), (A-18) + (B1-2), (A-18) + (B1-3), (A-18) + (B1-4), (A-18) + (B1-5),
(A-18) + (B1-6), (A-18) + (B1-7), (A-18) + (B1-8), (A-18) + (B1-9), (A-18) + (B1-10),
(A-18) + (B2-1), (A-18) + (B2-2), (A-18) + (B3-1), (A-18) + (B3-2), (A-18) + (B3-3),
(A-18) + (B4-1), (A-18) + (B4-2), (A-18) + (B4-3), (A-18) + (B4-4), (A-18) + (B4-5),
(A-18) + (B4-6), (A-18) + (B5-1), (A-18) + (B5-2), (A-18) + (B5-3), (A-18) + (B6-1),
(A-18) + (B6-2), (A-18) + (B6-3), (A-18) + (B6-4), (A-18) + (B7-1), (A-18) + (B7-2),
(A-18) + (B7-3), (A-18) + (B7-4), (A-18) + (B8-1), (A-18) + (B8-2);

(A-19) + (B1-1), (A-19) + (B1-2), (A-19) + (B1-3), (A-19) + (B1-4), (A-19) + (B1-5),
(A-19) + (B1-6), (A-19) + (B1-7), (A-19) + (B1-8), (A-19) + (B1-9), (A-19) + (B1-10),
(A-19) + (B2-1), (A-19) + (B2-2), (A-19) + (B3-1), (A-19) + (B3-2), (A-19) + (B3-3),
(A-19) + (B4-1), (A-19) + (B4-2), (A-19) + (B4-3), (A-19) + (B4-4), (A-19) + (B4-5),
(A-19) + (B4-6), (A-1 9) + (B5-1), (A-19) + (B5-2), (A-1 9) + (B5-3), (A-19) + (B6-1),
(A-19) + (B6-2), (A-19) + (B6-3), (A-19) + (B6-4), (A-19) + (B7-1), (A-19) + (B7-2),
(A-19) + (B7-3), (A-19) + (B7-4), (A-19) + (B8-1), (A-19) + (B8-2);

(A-20) + (B1-1), (A-20) + (B1-2), (A-20) + (B1-3), (A-20) + (B1-4), (A-20) + (B1-5),
(A-20) + (B1-6), (A-20) + (B1-7), (A-20) + (B1-8), (A-20) + (B1-9), (A-20) + (B1-10),
(A-20) + (B2-1), (A-20) + (B2-2), (A-20) + (B3-1), (A-20) + (B3-2), (A-20) + (B3-3),
(A-20) + (B4-1), (A-20) + (B4-2), (A-20) + (B4-3), (A-20) + (B4-4), (A-20) + (B4-5),
(A-20) + (B4-6), (A-20) + (B5-1), (A-20) + (B5-2), (A-20) + (B5-3), (A-20) + (B6-1),
(A-20) + (B6-2), (A-20) + (B6-3), (A-20) + (B6-4), (A-20) + (B7-1), (A-20) + (B7-2),
(A-20) + (B7-3), (A-20) + (B7-4), (A-20) + (B8-1), (A-20) + (B8-2);

(A-21) + (B1-1), (A-21) + (B1-2), (A-21) + (B1-3), (A-21) + (B1-4), (A-21) + (B1-5),
(A-21) + (B1-6), (A-21) + (B1-7), (A-21) + (B1-8), (A-21) + (B1-9), (A-21) + (B1-10),
(A-21) + (B2-1), (A-21) + (B2-2), (A-21) + (B3-1), (A-21) + (B3-2), (A-21) + (B3-3),
(A-21) + (B4-1), (A-21) + (B4-2), (A-21) + (B4-3), (A-21) + (B4-4), (A-21) + (B4-5),
(A-21) + (B4-6), (A-21) + (B5-1), (A-21) + (B6-2), (A-21) + (B5-3), (A-21) + (B6-1),
(A-21) + (B6-2), (A-21) + (B6-3), (A-21) + (B6-4), (A-21) + (B7-1), (A-21) + (B7-2),
(A-21) + (B7-3), (A-21) + (B7-4), (A-21) + (B8-1), (A-21) + (B8-2);

(A-22) + (B1-1), (A-22) + (B1-2), (A-22) + (B1-3), (A-22) + (B1-4), (A-22) + (B1-5),
(A-22) + (B1-6), (A-22) + (B1-7), (A-22) + (B1-8), (A-22) + (B1-9), (A-22) + (B1-10),
(A-22) + (B2-1), (A-22) + (B2-2), (A-22) + (B3-1), (A-22) + (B3-2), (A-22) + (B3-3),
(A-22) + (B4-1), (A-22) + (B4-2), (A-22) + (B4-3), (A-22) + (B4-4), (A-22) + (B4-5),
(A-22) + (B4-6), (A-22) + (B5-1), (A-22) + (B5-2), (A-22) + (B5-3), (A-22) + (B6-1),
(A-22) + (B6-2), (A-22) + (B6-3), (A-22) + (B6-4), (A-22) + (B7-1), (A-22) + (B7-2),
(A-22) + (B7-3), (A-22) + (B7-4), (A-22) + (B8-1), (A-22) + (B8-2);

(A-23) + (B1-1), (A-23) + (B1-2), (A-23) + (B1-3), (A-23) + (B1-4), (A-23) + (B1-5),
(A-23) + (B1-6), (A-23) + (B1-7), (A-23) + (B1-8), (A-23) + (B1-9), (A-23) + (B1-10),
(A-23) + (B2-1), (A-23) + (B2-2), (A-23) + (B3-1), (A-23) + (B3-2), (A-23) + (B3-3),
(A-23) + (B4-1), (A-23) + (B4-2), (A-23) + (B4-3), (A-23) + (B4-4), (A-23) + (B4-5),
(A-23) + (B4-6), (A-23) + (B5-1), (A-23) + (B5-2), (A-23) + (B5-3), (A-23) + (B6-1),
(A-23) + (B6-2), (A-23) + (B6-3), (A-23) + (B6-4), (A-23) + (B7-1), (A-23) + (B7-2),
(A-23) + (B7-3), (A-23) + (B7-4), (A-23) + (B8-1), (A-23) + (B8-2);

(A-24) + (B1-1), (A-24) + (B1-2), (A-24) + (B1-3), (A-24) + (B1-4), (A-24) + (B1-5),
(A-24) + (B1-6), (A-24) + (B1-7), (A-24) + (B1-8), (A-24) + (B1-9), (A-24) + (B1-10),
(A-24) + (B2-1), (A-24) + (B2-2), (A-24) + (B3-1), (A-24) + (B3-2), (A-24) + (B3-3),
(A-24) + (B4-1), (A-24) + (B4-2), (A-24) + (B4-3), (A-24) + (B4-4), (A-24) + (B4-5),
(A-24) + (B4-6), (A-24) + (B5-1), (A-24) + (B5-2), (A-24) + (B5-3), (A-24) + (B6-1),
(A-24) + (B6-2), (A-24) + (B6-3), (A-24) + (B6-4), (A-24) + (B7-1), (A-24) + (B7-2),
(A-24) + (B7-3), (A-24) + (B7-4), (A-24) + (B8-1), (A-24) + (B8-2);

(A-25) + (B1-1), (A-25) + (B1-2), (A-25) + (B1-3), (A-25) + (B1-4), (A-25) + (B1-5),
(A-25) + (B1-6), (A-25) + (B1-7), (A-25) + (B1-8), (A-25) + (B1-9), (A-25) + (B1-10),
(A-25) + (B2-1), (A-25) + (B2-2), (A-25) + (B3-1), (A-25) + (B3-2), (A-25) + (B3-3),
(A-25) + (B4-1), (A-25) + (B4-2), (A-25) + (B4-3), (A-25) + (B4-4), (A-25) + (B4-5),
(A-25) + (B4-6), (A-25) + (B5-1), (A-25) + (B5-2), (A-25) + (B5-3), (A-25) + (B6-1),
(A-25) + (B6-2), (A-25) + (B6-3), (A-25) + (B6-4), (A-25) + (B7-1), (A-25) + (B7-2),
(A-25) + (B7-3), (A-25) + (B7-4), (A-25) + (B8-1), (A-25) + (B8-2);

(A-26) + (B1-1), (A-26) + (B1-2), (A-26) + (B1-3), (A-26) + (B1-4), (A-26) + (B1-5),
(A-26) + (B1-6), (A-26) + (B1-7), (A-26) + (B1-8), (A-26) + (B1-9), (A-26) + (B1-10),
(A-26) + (B2-1), (A-26) + (B2-2), (A-26) + (B3-1), (A-26) + (B3-2), (A-26) + (B3-3),
(A-26) + (B4-1), (A-26) + (B4-2), (A-26) + (B4-3), (A-26) + (B4-4), (A-26) + (B4-5),
(A-26) + (B4-6), (A-26) + (B5-1), (A-26) + (B5-2), (A-26) + (B5-3), (A-26) + (B6-1),
(A-26) + (B6-2), (A-26) + (B6-3), (A-26) + (B6-4), (A-26) + (B7-1), (A-26) + (B7-2),
(A-26) + (B7-3), (A-26) + (B7-4), (A-26) + (B8-1), (A-26) + (B8-2);

(A-27) + (B1-1), (A-27) + (B1-2), (A-27) + (B1-3), (A-27) + (B1-4), (A-27) + (B1-5),
(A-27) + (B1-6), (A-27) + (B1-7), (A-27) + (B1-8), (A-27) + (B1-9), (A-27) + (B1-10),
(A-27) + (B2-1), (A-27) + (B2-2), (A-27) + (B3-1), (A-27) + (B3-2), (A-27) + (B3-3),
(A-27) + (B4-1), (A-27) + (B4-2), (A-27) + (B4-3), (A-27) + (B4-4), (A-27) + (B4-5),
(A-27) + (B4-6), (A-27) + (B5-1), (A-27) + (B5-2), (A-27) + (B5-3), (A-27) + (B6-1),
(A-27) + (B6-2), (A-27) + (B6-3), (A-27) + (B6-4), (A-27) + (B7-1), (A-27) + (B7-2),
(A-27) + (B7-3), (A-27) + (B7-4), (A-27) + (B8-1), (A-27) + (B8-2);

(A-28) + (B1-1), (A-28) + (B1-2), (A-28) + (B1-3), (A-28) + (B1-4), (A-28) + (B1-5),
(A-28) + (B1-6), (A-28) + (B1-7), (A-28) + (B1-8), (A-28) + (B1-9), (A-28) + (B1-10),
(A-28) + (B2-1), (A-28) + (B2-2), (A-28) + (B3-1), (A-28) + (B3-2), (A-28) + (B3-3),
(A-28) + (B4-1), (A-28) + (B4-2), (A-28) + (B4-3), (A-28) + (B4-4), (A-28) + (B4-5),
(A-28) + (B4-6), (A-28) + (B5-1), (A-28) + (B5-2), (A-28) + (B5-3), (A-28) + (B6-1),
(A-28) + (B6-2), (A-28) + (B6-3), (A-28) + (B6-4), (A-28) + (B7-1), (A-28) + (B7-2),
(A-28) + (B7-3), (A-28) + (B7-4), (A-28) + (B8-1), (A-28) + (B8-2);

(A-29) + (B1-1), (A-29) + (B1-2), (A-29) + (B1-3), (A-29) + (B1-4), (A-29) + (B1-5),
(A-29) + (B1-6), (A-29) + (B1-7), (A-29) + (B1-8), (A-29) + (B1-9), (A-29) + (B1-10),

(A-29) + (B2-1), (A-29) + (B2-2), (A-29) + (B3-1), (A-29) + (B3-2), (A-29) + (B3-3),
(A-29) + (B4-1), (A-29) + (B4-2), (A-29) + (B4-3), (A-29) + (B4-4), (A-29) + (B4-5),
(A-29) + (B4-6), (A-29) + (B5-1), (A-29) + (B5-2), (A-29) + (B5-3), (A-29) + (B8-1),
(A-29) + (B6-2), (A-29) + (B6-3), (A-29) + (B6-4), (A-29) + (B7-1), (A-29) + (B7-2),
(A-29) + (B7-3), (A-29) + (B7-4), (A-29) + (B8-1), (A-29) + (B8-2);

(A-30) + (B1-1), (A-30) + (B1-2), (A-30) + (B1-3), (A-30) + (B1-4), (A-30) + (B1-5),
(A-30) + (B1-6), (A-30) + (B1-7), (A-30) + (B1-8), (A-30) + (B1-9), (A-30) + (B1-10),
(A-30) + (B2-1), (A-30) + (B2-2), (A-30) + (B3-1), (A-30) + (B3-2), (A-30) + (B3-3),
(A-30) + (B4-1), (A-30) + (B4-2), (A-30) + (B4-3), (A-30) + (B4-4), (A-30) + (B4-5),
(A-30) + (B4-6), (A-30) + (B5-1), (A-30) + (B5-2), (A-30) + (B5-3), (A-30) + (B6-1),
(A-30) + (B6-2), (A-30) + (B6-3), (A-30) + (B6-4), (A-30) + (B7-1), (A-30) + (B7-2),
(A-30) + (B7-3), (A-30) + (B7-4), (A-30) + (B8-1), (A-30) + (B8-2);

(A-31) + (B1-1), (A-31) + (B1-2), (A-31) + (B1-3), (A-31) + (B1-4), (A-31) + (B1-5),
(A-31) + (B1-6), (A-31) + (B1-7), (A-31) + (B1-8), (A-31) + (B1-9), (A-31) + (B1-10),
(A-31) + (B2-1), (A-31) + (B2-2), (A-31) + (B3-1), (A-31) + (B3-2), (A-31) + (B3-3),
(A-31) + (B4-1), (A-31) + (B4-2), (A-31) + (B4-3), (A-31) + (B4-4), (A-31) + (B4-5),
(A-31) + (B4-6), (A-31) + (B5-1), (A-31) + (B5-2), (A-31) + (B5-3), (A-31) + (B6-1),
(A-31) + (B6-2), (A-31) + (B6-3), (A-31) + (B6-4), (A-31) + (B7-1), (A-31) + (B7-2),
(A-31) + (B7-3), (A-31) + (B7-4), (A-31) + (B8-1), (A-31) + (B8-2);

(A-32) + (B1-1), (A-32) + (B1-2), (A-32) + (B1-3), (A-32) + (B1-4), (A-32) + (B1-5),
(A-32) + (B1-6), (A-32) + (B1-7), (A-32) + (B1-8), (A-32) + (B1-9), (A-32) + (B1-10),
(A-32) + (B2-1), (A-32) + (B2-2), (A-32) + (B3-1), (A-32) + (B3-2), (A-32) + (B3-3),
(A-32) + (B4-1), (A-32) + (B4-2), (A-32) + (B4-3), (A-32) + (B4-4), (A-32) + (B4-5),
(A-32) + (B4-6), (A-32) + (B5-1), (A-32) + (B5-2), (A-32) + (B5-3), (A-32) + (B6-1),
(A-32) + (B6-2), (A-32) + (B6-3), (A-32) + (B6-4), (A-32) + (B7-1), (A-32) + (B7-2),
(A-32) + (B7-3), (A-32) + (B7-4), (A-32) + (B8-1), (A-32) + (B8-2);

(A-33) + (B1-1), (A-33) + (B1-2), (A-33) + (B1-3), (A-33) + (B1-4), (A-33) + (B1-5),
(A-33) + (B1-6), (A-33) + (B1-7), (A-33) + (B1-8), (A-33) + (B1-9), (A-33) + (B1-10),
(A-33) + (B2-1), (A-33) + (B2-2), (A-33) + (B3-1), (A-33) + (B3-2), (A-33) + (B3-3),
(A-33) + (B4-1), (A-33) + (B4-2), (A-33) + (B4-3), (A-33) + (B4-4), (A-33) + (B4-5),
(A-33) + (B4-6), (A-33) + (B5-1), (A-33) + (B5-2), (A-33) + (B5-3), (A-33) + (B6-1),
(A-33) + (B6-2), (A-33) + (B6-3), (A-33) + (B6-4), (A-33) + (B7-1), (A-33) + (B7-2),
(A-33) + (B7-3), (A-33) + (B7-4), (A-33) + (B8-1), (A-33) + (B8-2);

(A-34) + (B1-1), (A-34) + (B1-2), (A-34) + (B1-3), (A-34) + (B1-4), (A-34) + (B1-5),
(A-34) + (B1-6), (A-34) + (B1-7), (A-34) + (B1-8), (A-34) + (B1-9), (A-34) + (B1-10),
(A-34) + (B2-1), (A-34) + (B2-2), (A-34) + (B3-1), (A-34) + (B3-2), (A-34) + (B3-3),
(A-34) + (B4-1), (A-34) + (B4-2), (A-34) + (B4-3), (A-34) + (B4-4), (A-34) + (B4-5),
(A-34) + (B4-6), (A-34) + (B5-1), (A-34) + (B5-2), (A-34) + (B5-3), (A-34) + (B6-1),
(A-34) + (B6-2), (A-34) + (B6-3), (A-34) + (B6-4), (A-34) + (B7-1), (A-34) + (B7-2),
(A-34) + (B7-3), (A-34) + (B7-4), (A-34) + (B8-1), (A-34) + (B8-2);

(A-35) + (B1-1), (A-35) + (B1-2), (A-35) + (B1-3), (A-35) + (B1-4), (A-35) + (B1-5),
(A-35) + (B1-6), (A-35) + (B1-7), (A-35) + (B1-8), (A-35) + (B1-9), (A-35) + (B1-10),
(A-35) + (B2-1), (A-35) + (B2-2), (A-35) + (B3-1), (A-35) + (B3-2), (A-35) + (B3-3),
(A-35) + (B4-1), (A-35) + (B4-2), (A-35) + (B4-3), (A-35) + (B4-4), (A-35) + (B4-5),
(A-35) + (B4-6), (A-35) + (B5-1), (A-35) + (B5-2), (A-35) + (B5-3), (A-35) + (B6-1),
(A-35) + (B6-2), (A-35) + (B6-3), (A-35) + (B6-4), (A-35) + (B7-1), (A-35) + (B7-2),
(A-35) + (B7-3), (A-35) + (B7-4), (A-35) + (B8-1), (A-35) + (B8-2);

Weiterhin können die erfindungsgemäßen Kombinationen von Herbiziden verschiedene agrochemische Wirkstoffe beispielsweise aus der Gruppe der Safener, Fungizide, Insektizide, sich strukturell von den Herbiziden (A) und (B) unterscheidenden Herbizide und Pflanzenwachstumsregulatoren oder aus der Gruppe der im Pflanzenschutz üblichen Zusatzstoffe und Formulierungshilfsmittel enthalten

So kommen als weitere Herbizide beispielsweise folgende von den Herbiziden (A) und (B) sich strukturell unterscheidende Herbizide in Frage, vorzugsweise herbizide Wirkstoffe, die auf einer Inhibition von beispielsweise Acetolactat-Synthase, Acetyl-Coenzym-A-Carboxylase, PS I, PS II, HPPDO, Phytoene-Desaturase, Protoporphyrinogen-Oxidase, Glutamine-Synthetase, Cellulosebiosynthese, 5-Enolpyruvylshikimat-3-phosphat-Synthetase beruhen, wie sie z.B. in Weed Research 26, 441-445 (1986), oder "The Pesticide Manual", 13th edition, The British Crop Protection Council, 2003, oder 14. Auflage 2006/2007, oder in dem entsprechenden "e-Pestiolde Manual", Version 4 (2006), jeweils herausgegeben vom British Crop Protection Council, (im Folgenden auch kurz "PM"), und dort zitierter Literatur beschrieben sind. Listen von "Common names" sind auch in "The Compendium of Pesticide Common Names" im internet verfügbar. Die Herbizide sind dabei entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt:
acetochlor; acibenzolar-S-methyl; acifluorfen(-sodium); aclonifen; AD-67; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim(-sodium); ametryn; amidochlor, amidosulfuron; aminopyralid; Ammoniumpelargonate; AMS, d.h. Ammoniumsulfamat; ancimidol; anilofos; asulam; atrazine; aviglycine; azafenidin, azimsulfuron (DPX-A8947); aziprotryn; barban; BAS 516 H, d.h. 5-Fluor-2-phenyl-4H-3,1-benzoxazin-4-on; beflubutamid (UBH-509), benazolin(-ethyl); benfluralin; benfuresate; bensulfuron(-methyl); bensulide; bentazone; benzfendizone; benzobicyclon, benzofluor; benzoylprop(-ethyl); benzthiazuron; bilanaphos; bifenox; bispyribac(-sodium) (KIH-2023); borax; bromacil; bromobutide; bromofenoxim; bromoxynil; bromuron; buminafos; busoxinone; butachlor; butafenacil; butamifos; butenachlor (KH-218); buthidazole; butralin; butroxydim; butylate; caloxydim; carbetamide; catechin; CDAA, d.h. 2-Chlor-N,N-di-2-propenylacetamid; CDEC, d.h. Diethyldithiocarbaminsäure-2-chlorallylester; chlormesulon; chlomethoxyfen; chloramben; chlorazifop-butyl; chlorbromuron; chlorbufam; chlorfenac; chlorfenprop; chlorflurecol(-methyl); chlorflurenol(-methyl); chloridazon; chlorimuron(-ethyl); chlormequat(-chloride); chlomitrofen; chlorophthalim (MK-616); chlorotoluron; chloroxuron; chlorpropham; chlorsulfuron; chlorthal-dimethyl; chlorthiamid; chlortoluron; cinidon(-methyl und - ethyl); cinmethylin; cinosulfuron; clefoxydim; clethodim; clodinafop und dessen Esterderivate (z.B. clodinafop-propargyl); clofencet; clomazone; clomeprop; cloprop; cloproxydim; clopyralid; clopyrasulfuron(-methyl); cloransulam(-methyl); cumyluron (JC 940); cyanamide; cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-D; 2,4-DB; dalapon; daminozide; dazomet; n-decanol; desmedipham; desmetryn; di-allate; dicamba; dichlobenil; dichlormid; dichlorprop(-P)-salze; diclofop und dessen Ester wie diclofop-methyl; diclofop-P(-methyl); diclosulam; diethatyl(-ethyl); difenoxuron; difenzoquat(-metilsulfate); diflufenican; diflufenzopyr(-sodium); dimefuron; dimepiperate; dimethachlor; dimethametryn; dimethazone; dimethenamid (SAN-582H); dimethenamide-P; dimethylarsinic acid; dimethipin; dimetrasulfuron; dimexyflam; dinitramine; dinoseb; dinoterb; diphenamid; dipropetryn; diquat-salze; dithiopyr; diuron; DNOC; eglinazineethyl; EL 77, d.h. 5-Cyano-1-(1,1-dimethylethyl)-N-methyl-1H-pyrazole-4-carboxamid; endothal; epoprodan; EPTC; esprocarb; ethalfluralin; ethametsulfuron-methyl; ethephon; ethidimuron; ethiozin; ethofumesate; ethoxyfen und dessen Ester (z.B. Ethylester, HN-252); ethoxysulfuron; etobenzanid (HW 52); F5231, d.h. N-[2-Chlor-4-fluor-5-[4-(3-fluorpropyl)-4,5-dihydro-5-oxo-1H-tetrazol-1-yl]-phenyl]-ethansulfonamid; fenchlorazole(-ethyl); fenclorim; fenoprop; fenoxan, fenoxaprop und fenoxaprop-P sowie deren Ester, z.B. fenoxaprop-P-ethyl und fenoxaprop-ethyl; fenoxydim; fenuron; ferrous sulfate; flamprop(-methyl oder -isopropyl oder -isopropyl-L); flamprop-M(-methyl oder -isopropyl); flazasulfuron; floazulate (JV-485); florasulam; fluazifop und fluazifop-P und deren Ester, z.B. fluazifop-butyl und fluazifop-P-butyl; flucarbazone(-sodium); flucetosulfuron; fluchloralin; flufenacet; flufenpyl(-ethyl); flumetralin; flumetsulam; flumeturon; flumiclorac(-pentyl); flumioxazin (S-482); flumipropyn; fluometuron; fluorochloridone; fluorodifen; fluoroglycofen(-ethyl); flupoxam (KNW-739); flupropacil (UBIC-4243); flupropanoate; flupyrsulfuron(-methyl)(-sodium); flurenol(-butyl); fluridone; flurochloridone; fluroxypyr(-meptyl); flurprimidol; flurtamone; fluthiacet(-methyl) (KIH-9201); fluthiamide; fluxofenim; fomesafen; foramsulfuron; forchlorfenuron; fosamine; furyloxyfen; gibberillic acid; glufosinate(-ammonium); glyphosate(-isopropylammonium); halosafen; halosulfuron(-methyl); haloxyfop und dessen Ester; haloxyfop-P (= R-haloxyfop) und dessen Ester; HC-252; hexazinone; HNPC-C9908, d.h. 2-[[[[[4-Methoxy-6-(methylthior2-pyrimidinyl]amino]carbonyl]amino]sulfonyl]-benzoesäuremethylester; imazosulfuron; inabenfide; indanofan; iodosulfuronmethyl(-sodium); ioxynil; isocarbamid; isopropalin; isoproturon; isoxachlortole; isoxapyrifop; karbutilate; lactofen; lenacil; linuron; Maleinsäurehydrazid (MH); MBTA; MCPA; MCPB; mecoprop(-P); mefenacet; mefluidide; mepiquat(-chloride); mesosulfuron(-methyl); mesotrione; metam; metamifop; metamitron; metazachlor; methabenzthiazuron; metham; methoxyphenone; methylarsonic acid; methylcyclopropene; methyldymron; methylisothiocyanate; methabenzthiazuron; metobenzuron; metobromuron; (alpha-)metolachlor; metosulam (XRD 511); metoxuron; metribuzin; metsulfuron-methyl; molinate; monalide; monocarbamide dihydrogensulfate; monolinuron; monuron; monosulfuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; neburon; nicosulfuron; nipyraclofen; nitralin; nitrofen; nitrophenolate mixture; nitrofluorfen; nonanoic acid; norflurazon; orbencarb; orthosulfamuron; oxabetrinil; oryzalin; oxasulfuron; oxaziclomefone; oxyfluorfen; paraquat(-dichloride); pebulate; pelargonic acid; pendimethalin; penoxulam; pentachlorophenol; pentanochlor; pentoxazone; perfluidone; pethoxamid; phenisopham; phenmedipham; picloram; picolinafen; pinoxaden; piperophos; piributicarb; pirifenop-butyl; pretilachlor; primisulfuron(-methyl); probenazole; procarbazone-(sodium); procyazine; prodiamine; profluralin; profoxydim; prohexadione(-calcium); prohydrojasmon; proglinazine(-ethyl); prometon; prometryn; propachlor; propanil; propaquizafop und dessen Ester; propazine; propham; propisochlor; propoxycarbazone(-sodium) (MKH-6561); propyzamide; prosulfalin; prosulfocarb; prosulfuron (CGA-152005); prynachlor, pyraclonil; pyrazon; pyrazosulfuron(-ethyl); pyribambenz-isopropyl (ZJ 0702); pyrimbambenz-propyl (ZJ 0273); pyribenzoxim; pyributicarb; pyridafol; pyridate; pyriftalid; pyriminobac(-methyl) (KIH-6127); pyrimisulfan (KIH-5996); pyrithiobac(-sodium) (KIH-2031); pyroxofop und dessen Ester (z.B. Propargylester); pyroxsulam; quinclorac; quinmerac; quinoclamine; quinofop und dessen Esterderivate, quizatofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; sintofen; SN 106279, d.h. 2-[[7-[2-Chlor-4-(trifluor-methyl)-phenoxy]-2-naphthalenyl]-oxy]-propansäure und -methylester; sulcotrione; sulfazuron; sulfometuron(-methyl); sulfosate (ICI-A0224); sulfosulfuron; TCA(-sodium); tebutam (GCP-5544); tebuthiuron; tecnacene; tefuryltrione; tembotrione; tepraloxydim; terbacil; terbucarb; terbuchlor; terbumeton; terbuthylazine; terbutryn; TFH 450, d.h. N,N-Diethyl-3-[(2-ethyl-6-methylphenyl)-sulfonyl]-1 H-1,2,4-triazol-1-carboxamid; thenylchlor (NSK-850); thiafluamide, thiazafluron; thiazopyr (Mon-13200); thidiazimin (SN-24085); thidiazuron; thiencarbazone(-methyl); thifensulfuron(-methyl); thiobencarb; Ti 35; tiocarbazil; tralkoxydim; tri-allate; triasulfuron; triaziflam; triazofenamide; tribenuron(-methyl); triclopyr; tridiphane; trietazine; trifloxysulfuron(-sodium); trifluralin; triflusulfuron und Ester (z.B. Methylester, DPX-66037); trimeturon; trinexapac; tritosulfuron; tsitodef; vernolate; WL 114547, d.h. 5-Phenoxy-1-[3-(trifluormethyl)-phenyl]-1H-tetrazol; D-489; ET-751; KIH-218; KIH-485; KIH-509; KPP-300; LS 82-556; NC-324; NC-330; DPX-N8189; SC-0774; DOWCO-535; DK-8910; V-53482; PP-600; MBH-001; TH-547; SYN-523; IDH-100; SYP-249; HOK-201; IR-6396; MTB-951; NC-620.

Von besonderem Interesse ist die selektive Bekämpfung von Schadpflanzen in Kulturen von Nutz- und Zierpflanzen. Obgleich die Herbizide (A) und (B), bereits in vielen Kulturen sehr gute bis ausreichende Selektivität aufweisen, können prinzipiell in einigen Kulturen und vor allem auch im Falle von Mischungen mit anderen Herbiziden, die weniger selektiv sind, Phytotoxizitäten an den Kulturpflanzen auftreten. Diesbezüglich sind Kombinationen von Herbiziden (A) und (B) von besonderem Interesse, welche die erfindungsgemäß kombinierten herbiziden Wirkstoffe und einen oder mehrere Safener enthalten. Die Safener, welche in einem antidotisch wirksamen Gehalt eingesetzt werden, reduzieren die phytotoxischen Nebenwirkungen der eingesetzten Herbizide/Pestizide, z. B. in wirtschaftlich bedeutenden Kulturen wie Getreide (Weizen, Gerste, Roggen, Mais, Reis, Hirse), Zuckerrübe, Zuckerrohr, Raps, Baumwolle und Soja, vorzugsweise Getreide.

Die Safener sind vorzugsweise ausgewählt aus der Gruppe bestehend aus:
A) Verbindungen der Formel (S-I), 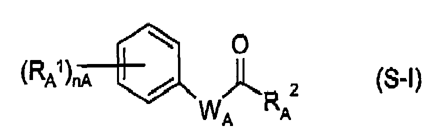 wobei die Symbole und Indizes folgende Bedeutungen haben:
   - n_{A}: ist eine natürliche Zahl von 0 bis 5, vorzugsweise 0 bis 3;
   - R_{A}¹: ist Halogen, (C₁-C₄)-Alkyl, (C₁-C₄)-Alkoxy, Nitro oder (C₁-C₄)-Haloalkyl;
   - W_{A}: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N- Atom und höchstens ein O-Atom im Ring enthalten ist, vorzugsweise ein Rest aus der Gruppe (W_{A}¹) bis (W_{A}⁴), 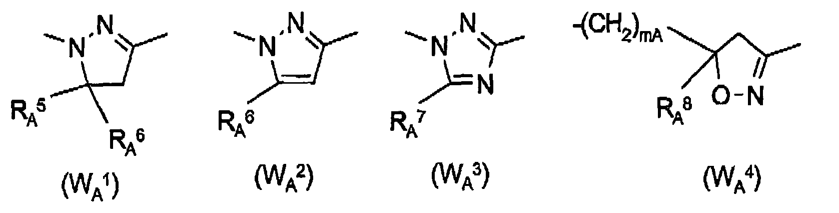
   - m_{A}: ist 0 oder 1;
   - R_{A}²: ist OR_{A}³, SR_{A}³ oder NR_{A}³R_{A}⁴ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-I) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR_{A}³, NHR_{A}⁴ oder N(CH₃)₂, insbesondere der Formel OR_{A}³;
   - R_{A}³: ist Wasserstoff oder ein unsubstituierter oder substituierter aliphatischer Kohlenwasserstoffrest, vorzugsweise mit insgesamt 1 bis 18 C-Atomen;
   - R_{A}⁴: ist Wasserstoff, (C₁-C₆)-Alkyl, (C₁-C₆)-Alkoxy oder substituiertes oder unsubstituiertes Phenyl;
   - R_{A}⁵: ist H, (C₁-C₈)-Alkyl, C₁-C₈(Haloalkyl), (C₁-C₄)-Alkoxy(C₁-C₈)-Alkyl, Cyano oder COOR_{A}⁹, worin R_{A}⁹ Wasserstoff, (C₁-C₈)-Alkyl, (C₁-C₈)-Haloalkyl, (C₁-C₄)- Alkoxy-(C₁-C₄)-alkyl, (C₁-C₆)-Hydroxyalkyl, (C₃-C₁₂)-Cycloalkyl oder Tri-(C₁- C₄)-alkyl-silyl ist;
   - R_{A}⁶, R_{A}⁷, R_{A}⁸: sind gleich oder verschieden Wasserstoff, (C₁-C₈)-Alkyl, (C₁-C₈)-Haloalkyl, (C₃-C₁₂)-Cycloalky/ oder substituiertes oder unsubstituiertes Phenyl;
   vorzugsweise:
   a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäure-ethylester (S1-1) ("Mefenpyr-diethyl", siehe Pestic. Man.), und verwandte Verbindungen, wie sie in der WO 91/07874 beschrieben sind;
   b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,11-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind;
   c) Verbindungen vom Typ der Triazolcarbonsäuren, vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-6), und verwandte Verbindungen wie sie in EP-A-174 562 und EP-A-346 620 beschrieben sind;
   d) Verbindungen vom Typ der 5-Benzyl- oder 5-Phenyl-2-isoxazolin-3- carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) ("Isoxadifen-ethyl") oder -n-propylester (S1-10) oder der 5-(4-Fluorphenyl)-5-phenyl-2-isoxazolin-3-carbonsäureethylester (S1-11), wie sie in der Patentanmeldung WO-A-95/07897 beschrieben sind.
B) Chinolinderivate der Formel (S-II), 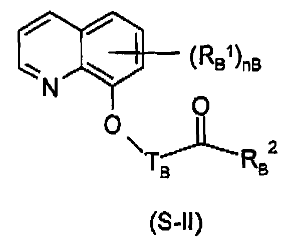 wobei die Symbole und Indizes folgende Bedeutungen haben:
   - R_{B}¹: Halogen, (C₁-C₄)-Alkyl, (C₁-C₄)-Alkoxy, Nitro oder (C₁-C₄)-Haloalkyl;
   - n_{B}: ist eine natürliche Zahl von 0 bis 5, vorzugsweise 0 bis 3;
   - R_{B}²: OR_{B}³, SR_{B}³ oder NR_{B}³R_{B}⁴ oder ein gesättigter
   oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR_{B}³, NHR_{B}⁴ oder N(CH₃)₂, insbesondere der Formel OR_{B}³;
   R_{B}³ ist Wasserstoff oder ein unsubstituierter oder substituierter aliphatischer Kohlenwasserstoffrest, vorzugsweise mit insgesamt 1 bis 18 C-Atomen;
   R_{B}⁴ ist Wasserstoff, (C₁-C₆)-Alkyl, (C₁-C₆)-Alkoxy oder substituiertes oder unsubstituiertes Phenyl;
   T_{B} ist eine (C₁ oder C₂)-Alkandiylkette, die unsubstituiert oder mit einem oder zwei (C₁-C₄)-Alkylresten oder mit [(C₁-C₃)-Alkoxy]-carbonyl substituiert ist;
   vorzugsweise:

   a) Verbindungen vom Typ der 8-Chinolinoxyessigsäure (S2), vorzugsweise (5-Chlor-8-chinolinoxy)essigsäure-(1-methylhexyl)-ester (Common name "Cloquintocet-mexyl" (S2-1) (siehe Pestic. Man.), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie deren Hydrate und Salze wie sie in der WO-A-2002/034048 beschrieben sind.
   b) Verbindungen vom Typ der (5-Chlor-8-chinolinoxy)malonsäure, vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
C) Verbindungen der Formel (S-III) 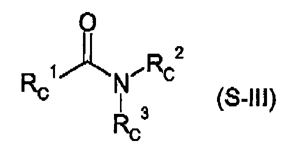 wobei die Symbole und Indizes folgende Bedeutungen haben:
   R_{C}¹ ist (C₁-C₄)-Alkyl, (C₁-C₄)-Haloalkyl, (₁-C₄)-Alkenyl, (C₂-C₄)-Haloalkenyl, (C₃-C₇)-Cycloalkyl, vorzugsweise Dichlormethyl;
   R_{C}², R_{C}³ ist gleich oder verschieden Wasserstoff, (C₁-C₄)-Alkyl, (₂-C₄)-Alkenyl, (C₂-C₄)-Alkinyl, (C₁-C₄)-Haloalkyl, (C₂-C₄)-Haloalkenyl, (C₁-C₄)-Alkylcarbamoyl-(C₁-C₄)-alkyl, (C₂-C₄)-Alkenylcarbamoyl-(C₁-C₄)-alkyl, (C₁-C₄)-Alkoxy-(C₁-C₄)-alkyl, Dioxolanyl-(C₁-C₄)-alkyl, Thiazolyl, Furyl, Furylalkyl, Thienyl, Piperidyl, substituiertes oder unsubstituiertes Phenyl, oder R_{C}² und R_{C}³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;
   vorzugsweise:
   Wirkstoffe vom Typ der Dichloracetamide, die häufig als Vorauflaufsafener (bodenwirksame Safener) angewendet werden, wie z. B.
   "Dichlormid" (siehe Pestic.Man.) (= N,N-Diallyl-2,2-dichloracetamid),
   "R-29148" (= 3-Dichloracetyl-2,2,5-trimethyl-1,3-oxazolidin von der Firma Stauffer),
   "R-28725" (= 3-Dichloracetyl-2,2,-dimethyl-1 ,3-oxazolidin von der Firma Stauffer),
   "Benoxacor" (siehe Pestic. Man.) (= 4-Dichloracetyl-3,4-dihydro-3-methyl-2H-1,4-benzoxazin),
   "PPG-1292" (= N-Allyl-N-[(1,3-dioxolan-2-yl)-methyl]-dichloracetamid von der Firma PPG Industries),
   "DKA-24" (= N-Allyl-N-[(allylaminocarbonyl)-methyl]-dichloracetamid von der Firma Sagro-Chem),
   "AD-67" oder "MON 4660" (= 3-Dichloracetyl-1-oxa-3-aza-spiro[4,5]decan von der Firma Nitrokemia bzw. Monsanto),
   "TI-35" (= 1-Dichloracetyl-azepan von der Firma TRI-Chemical RT)
   "Diclonon" (Dicyclonon) oder "BAS145138" oder "LAB145138" (= 3-Dichloracetyl-2,5,5-trimethyl-1,3-diazabicyclo[4.3.0]nonan von der Firma BASF) und
   "Furilazol" oder "MON 13900" (siehe Pestic. Man.) (= (RS)-3-Dichloracetyl-5-(2-furyl)-2,2-dimethyloxazolidin)
D) N-Acylsulfonamide der Formel (S-IV) und ihre Salze, 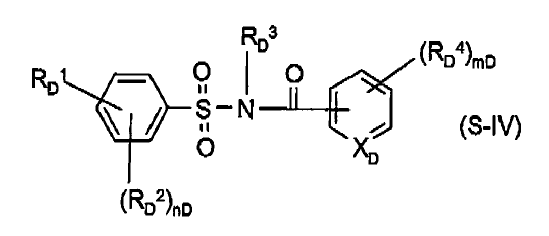 worin
   X_{D} ist CH oder N;
   R_{D}¹ ist CO-NR_{D}⁵R_{D}⁶ oder NHCO-R_{D}⁷;
   R_{D}² ist Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder(C₁-C₄)-Alkylcarbonyl;
   R_{D}³ ist Wasserstoff, (C₁-C₄)-Alkyl, (C₂-C₄)-Alkenyl oder (C₂-C₄)-Alkinyl;
   R_{D}⁴ ist Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
   R_{D}⁵ ist Wasserstoff, (C₁-C₆)-Alkyl, (C₃-C₆)-Cycloalkyl, (₂-C₆)-Alkenyl, (C₂-C₆)-Alkinyl, (C₅-C₆)-Cycloalkenyl, Phenyl oder 3- bis 6-gliedriges Heterocyclyl enthaltend v_{D} Heteroatome aus der Gruppe Stickstoff, Sauerstoff und Schwefel, wobei die sieben letztgenannten Reste durch v_{D} Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
   R_{D}⁶ ist Wasserstoff, (C₁-C₆)-Alkyl, (C₂-C₆)-Alkenyl oder (C₂-C₆)-Alkinyl, wobei die drei letztgenannten Reste durch v_{D} Reste aus der Gruppe Halogen, Hydroxy, (C₁-C₄)-Alkyl, (C₁-C₄)-Alkoxy und (Cᵢ-C₄)-Alkylthio substituiert sind, oder
   R_{D}⁵ und R_{D}⁶ bilden gemeinsam mit dem dem sie tragenden Stickstoffatom einen Pyrrolidinyl- oder Piperidinyl-Rest;
   R_{D}⁷ ist Wasserstoff, (C₁-C₄)-Alkylamino, Di-(C₁-C₄)-alkylamino, (C₁-C₆)-Alkyl, (C₃-C₆)-Cycloalkyl, wobei die 2 letztgenannten Reste durch v_{D} Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert sind;
      - n_{D}: ist 0, 1 oder 2;
      - m_{D}: ist 1 oder 2;
      - v_{D}: ist 0, 1, 2 oder 3;
   davon bevorzugt sind Verbindungen von Typ der N-Acylsulfonamide, z.B. der nachfolgenden Formel (S-V), die z. B. bekannt sind aus WO 97/45016 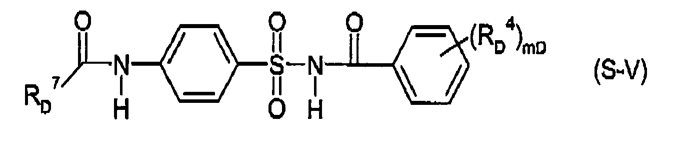 worin
   R_{D}⁷ (C₁-C₆)Alkyl, (C₃-C₆)Cycloalkyl, wobei die 2 letztgenannten Reste durch v_{D} Substituenten aus der Gruppe Halogen, (C₁-C₄)Alkoxy, Halogen-(C₁-C₆)alkoxy und (C₁-C₄)Alkylthlo und im Falle cyclischer Reste auch (C₁-C₄)Alkyl und (C₁-C₄)Haloalkyl substituiert sind;
   R_{D}⁴ Halogen, (C₁-C₄)-Alkyl, (C₁-C₄)-Alkoxy, CF_{3;}
   m_{D} 1 oder 2 bedeutet;
   v_{D} ist 0, 1, 2 oder 3;
   sowie
   Acylsulfamoylbenzoesäureamide, z.B. der nachfolgenden Formel (S-VI), die z.B. bekannt sind aus WO 99/16744, 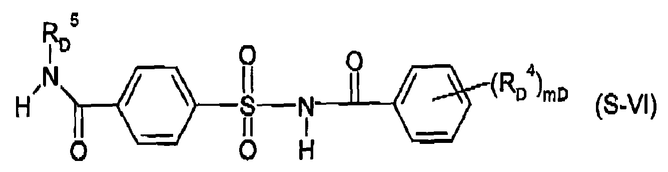 z.B. solche worin
   R_{D}⁵ = Cyclo-Propyl und (R_{D}⁴) = 2-OMe ist ("Cyprosulfamide", S3-1),
   R_{D}⁵ = Cyclo-Propyl und (R_{D}⁴) = 5-Cl-2-OMe ist (S3-2),
   R_{D}⁵ = Ethyl und (R_{D}⁴) = 2-OMe ist (S3-3),
   R_{D}⁵= isopropyl und (R_{D}⁴) = 5-Cl-2-OMe ist (S3-4) und
   R_{D}⁵ = iso-Propyl und (R_{D}⁴) = 2-OMe ist (S3-5);
   sowie
   Verbindungen vom Typ der N-Acylsulfamoylphenylhamstoffe der Formel (S-VII), die z.B. bekannt sind aus der EP-A-365484, 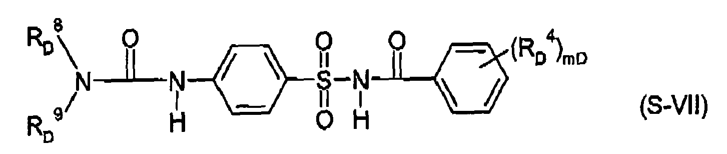 worin
   R_{D}⁸ und R_{D}⁸ unabhängig voneinander Wasserstoff, (C₁-C₈)-Alkyl, (C₃-C₈)-Cycloalkyl, (C₃-C₆)-Alkenyl, (C₃-C₈)-Alkinyl,
   R_{D}⁴ Halogen, (C₁-C₄)-Alkyl, (C₁-C₄)-Alkoxy, CF₃
   m_{D} 1 oder 2 bedeutet;
   davon insbesondere
   1-[4-(N-2-Methoxybenzoylsulfamoyl)phenyl]-3-mothylhamstoff,
   1-[4-(N-2-Methoxybenzoylsulfamoyl)phenyl]-3,3-dimethylhamstoff,
   1-[4-(N-4,5-Dimethylbenzoylsulfamoyl)phenyl]-3-methylhamstoff,
   1-[4-(N-Naphthoylsulfamoyl)phenyl]-3,3-dimethylhamstoff,
G) Wirkstoffe aus der Klasse der Hydroxyaromaten und der aromatischaliphatischen Carbonsäurederivate, z.B. 3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 1,2-Dihydro-2-oxo-6-trifluoromethylpyridin-3-carboxamid, 2-Hydroxyzimtsäure, 2,4-Dichlorimtsäure, wie sie in der WO 2004084631, WO 2005015994, WO 2006007981, WO 2005016001 beschrieben sind;
H) Wirkstoffe aus der Klasse der 1,2-Dihydrochinoxalin-2-one, z.B. 1-Methyl-3-(2-thienyl)-1,2-dihydrochinoxalin-2-on, 1-Methyl-3-(2-thienyl)-1,2-dihydro-chinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO 2005112630 beschrieben sind,
I) Wirkstoffe, die neben einer herbiziden Wirkung gegen Schadpflanzen auch Safenerwirkung an Kulturpflanzen wie Reis aufweisen, wie z. B. "Dimepiperate" oder "MY-93" (siehe Pestic. Man.) (= Piperidin-1-thiocarbonsäure-S-1-methyl-1-phenylethylester), das als Safenerfür Reis gegen Schäden des Herbizids Molinate bekannt ist,
   "Daimuron" oder "SK 23" (siehe Pestic. Man.) (= 1-(1-Methyl-1-phenylethyl)-3-p-tolylharnstoff), das als Safener für Reis gegen Schäden des Herbizids Imazosulfuron bekannt ist,
   "Cumyluron" = "JC-940" (= 3-(2-Chlorphenylmethyl)-1-(1-methyl-1-phenylethyl)harnstoff, siehe JP-A-60087254), das als Safener für Reis gegen Schäden einiger Herbizide bekannt ist,
   "Methoxyphenon" oder "NK 049" (= 3,3'-Dimethyl-4-methoxy-benzophenon), das als Safener für Reis gegen Schäden einiger Herbizide bekannt ist,
   "CSB" (= 1-Brom-4-(chlormethylsulfonyl)benzol) (CAS-Reg. Nr. 54091-06-4 von Kumiai), das als Safener gegen Schäden einiger Herbizide in Reis bekannt ist,
K) Verbindungen der Formel (S-IX),
   wie sie in der WO-A-1998/38856 beschrieben sind 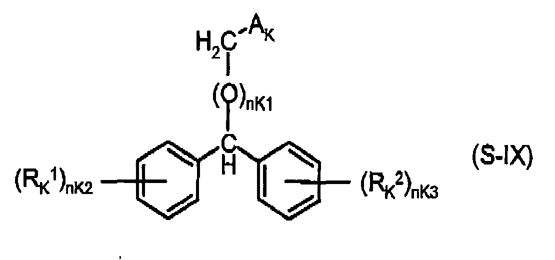 worin die Symbole und Indizes folgende Bedeutungen haben:
   R_{K}¹, R_{K}² unabhängig voneinander Halogen, (C₁-C₄)-Alkyl, (C₁-C₄)-Alkoxy, (C₁-C₄)-Haloalkyl, (C₁-C₄)-Alkylamino, Di-(C₁-C₄)-Alkylamino, Nitro;
   A_{K} COOR_{K}³ oder COOR_{K}⁴
   R_{K}³, R_{K}⁴ unabhängig voneinander Wasserstoff, (C₁-C₄)-Alkyl, (C₂-C₆)-Alkenyl, (C₂-C₄)-Alkinyl, Cyanoalkyl, (C₁-C₄)-Haloalkyl, Phenyl, Nitrophenyl, Benzyl, Halobenzyl, Pyridinylalkyl und Alkylammonium,
   n_{K}¹ 0 oder 1
   n_{K}², n_{K}³ unabhängig voneinander 0, 1 oder 2
   vorzugsweise: Methyl-(diphenylmethoxy)acetat (CAS-Regno: 41858-19-9),
L) Verbindungen der Formel (S-X),
   wie sie in der WO A-98/27049 beschrieben sind 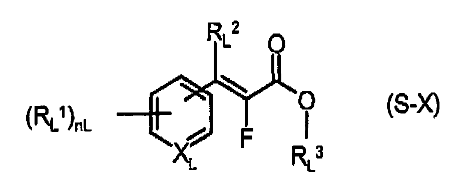 worin die Symbole und Indizes folgende Bedeutungen haben:
   X_{L} CH oder N,
   n_{L} für den Fall, dass X=N ist, eine ganze Zahl von 0 bis 4 und
      für den Fall, dass X=CH ist, eine ganze Zahl von 0 bis 5,
   R_{L}¹ Halogen, (C₁-C₄)-Alkyl, (C₁-C₄)-Haloalkyl, (C₁-C₄)-Alkoxy, (C₁-C₄)-Haloalkoxy, Nitro, (C₁-C₄)-Alkylthio, (C₁-C₄)-Alkylsulfonyl, (C₁-C₄)-Alkoxycarbonyl, ggf.
      substituiertes. Phenyl, ggf. substituiertes Phenoxy,
   R_{L}² Wasserstoff oder (C₁-C₄)-Alkyl
   R_{L}³ Wasserstoff, (C₁-C₈)-Alkyl, (C₂-C₄)-Alkenyl, (C₂-C₄)-Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze.
M) Wirkstoffe aus der Klasse der 3-(5-Tetrazolylcarbonyl)-2-chinolone, z.B. 1,2-Dihydro-4-hydroxy-1-ethyl-3-(5-tetrazolylcarbonyl)-2-chinolon (CAS-Regno: 219479-18-2), 1,2-Dihydro-4-hydroxy-1-methyl-3-(5-tetrazolyl-carbonyl)-2-chinolon (CAS-Regno: 95855-00-8), wie sie in der WO-A-1999000020 beschrieben sind,
N) Verbindungen der Formeln (S-XI) oder (S-XII)
   wie sie in der WO-A-2007023719 und WO-A-2007023764 beschrieben sind 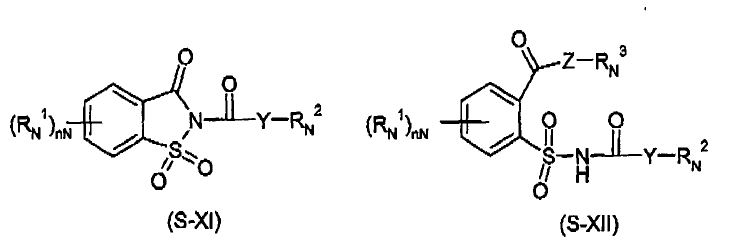 worin
   R_{N}¹ Halogen, (C₁-C₄)-Alkyl, Methoxy, Nitro, Cyano, CF₃, OCF₃
   Y, Z unabhängig voneinander O oder S,
   n_{N} eine ganze Zahl von 0 bis 4,
   R_{N}² (C₁-C₁₆)-Alkyl, (C₂-C₆)-Alkenyl, (C₃-C₆)-Cycloalkyl, Aryl; Benzyl, Halogenbenzyl,
   R_{N}³ Wasserstoff, (C₁-C₆)Alkyl bedeuten;
O) eine oder mehreren Verbindungen aus Gruppe:
   1,8-Naphthalsäureanhydrid,
   O,O-Diethyl S-2-ethylthioethyl phosphordithioat (Disulfoton),
   4-Chlorphenyl-methylcarbamat (Mephenate),
   O,O-Diethyl-O-phenylphosphorotioat (Dietholate),
   4-Carboxy-3,4-dihydro-2H-1-benzopyran-4-essigsäure (CL-304415, CAS-Regno: 31541-57-8),
   2-propenyl 1-oxa-4-azaspiro[4.5]decano-4-carbodithloate (MG-838, CAS-Regno: 133993-74-5),
   Methyl-[(3-oxo-1H-2-benzothiopyran-4(3H)-yliden)methoxy]acetate (aus WO-A-98/13361; CAS-Regno: 205121-04-6),
   Cyanomethoxyimino(phenyl)acetonitril (Cyometrinil),
   1,3-Dioxolan-2-ylmethoxyimino(phenyl)acetonitril (Oxabetrinil),
   4'-Chlor-2,2,2-trifluoracetophenon-O-1,3-dioxolan-2-ylmethyloxim (Fluxofenim),
   4,6-Dichlor-2-phenylpyrimidin (Fenclorim),
   Benzyl-2-chlor-4-trifluormethyl-1,3-thiazol-5-carboxylat (Flurazole),
   2-Dichlormethyl-2-methyl-1,3-dioxolan (MG-191),
einschließlich der Stereoisomeren und der in der Landwirtschaft gebräuchlichen Salze.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Einige der Safener sind bereits als Herbizide bekannt und entfalten somit neben der Herbizidwirkung bei Schadpflanzen zugleich auch Schutzwirkung bei den Kulturpflanzen.
Die Gewichtsverhältnisse von Herbizid(mischung) zu Safener hängt im Allgemeinen von der Aufwandmenge an Herbizid und der Wirksamkeit des jeweiligen Safeners ab und kann innerhalb weiter Grenzen variieren, beispielsweise im Bereich von 200:1 bis 1:200, vorzugsweise 100:1 bis 1:100, insbesondere 20:1 bis 1:20. Die Safener können analog den Verbindungen der Formel (I) oder deren Mischungen mit weiteren Herbiziden/Pestiziden formuliert werden und als Fertigformulierung oder Tankmischung mit den Herbiziden bereitgestellt und angewendet werden.
Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen wie Unkräuter auf, einschließlich Arten die resistent sind gegen herbizide Wirkstoffe wie Glyphosate, Glufosinate, Atrazin oder Imidazolinon-Herbizide. Auch schwer bekämpfbare perennierende Unkräuter, die aus Rhizomen, Wurzelstöcken oder anderen Dauerorganen austreiben, werden durch die Wirkstoffe gut erfaßt. Dabei können die Substanzen z.B. im Vorsaat-, Vorauflauf- oder Nachauflaufverfahren ausgebracht werden, z.B. gemeinsam oder getrennt. Bevorzugt ist z.B. die Anwendung im Nachauflaufverfahren, insbesondere auf die aufgelaufenen Schadpflanzen.

Im einzelnen seien beispielhaft einige Vertreter der mono- und dikotylen Unkrautflora genannt, die durch die erfindungsgemäßen Verbindungen kontrolliert werden können, ohne dass durch die Nennung eine Beschränkung auf bestimmte Arten erfolgen soll.

Auf der Seite der monokotylen Unkrautarten werden z.B. Avena spp., Alopecurus spp., Apera spp., Brachiaria spp., Bromus spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den Kombinationen verwendeten und wirksamen Dosierungen von Verbindungen (A) und (B) so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombinationen von Wirkstoffen wird eine erhebliche Reduzierung der nötigen Aufwandmenge der Wirkstoffe ermöglicht.

Bei gemeinsamer Anwendung von Herbiziden der Gruppe (A) und solchen der Gruppe (B) treten bevorzugt überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsem, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gefordert, um landwirtschaftliche/forstwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller lnhaltsstoffe. So sind transgene Pflanzen mit erhöhtem Stärkegehalt oder veränderter Qualität der Stärke oder solche mit anderer Fettsäurezusammensetzung des Emteguts bekannt. Gleichermaßen können die Wirkstoffe aufgrund ihrer herbiziden und pflanzenwachstumsregulatorischen Eigenschaften auch zur Bekämpfung von Schadpflanzen in Kulturen von bekannten oder noch zu entwickelnden durch Mutatantenselektion erhaltenen Pflanzen eingesetzt werden.

Allgemein bekannte Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).
Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremoleküfen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J.1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin ein Verfahren zur Bekämpfung von unerwünschten Pflanzen, vorzugsweise in Pflanzenkulturen, das dadurch gekennzeichnet ist, dass die Herbizide (A) und (B) der erfindungsgemäßen Herbizid-Kombination auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können eines oder mehrere Herbizide (A) vor, nach oder gleichzeitig mit dem oder den Herbizid(en) (B) auf die Pflanzen, das Saatgut oder die Fläche, auf der die Pflanzen wachsen (z.B. die Anbaufläche), appliziert werden.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Die erfindungsgemäßen Herbizid-Kombinationen werden selektiv zur Bekämpfung unerwünschten Pflanzenwuchses eingesetzt werden, z.B. in Pflanzenkulturen wie Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel. Dabei erfolgt die Applikation bevorzugt auf die aufgelaufenen Schadpflanzen (z.B. Unkräuter oder unerwünschte Kulturpflanzen), insbesondere vor dem Auflaufen von (erwünschten) Kulturpflanzen.

Gegenstand der Erfindung ist auch die Verwendung der erfindungsgemäßen Herbizid-Kombinationen zur Bekämpfung von unerwünschtem Pflanzenwuchs, vorzugsweise in Pflanzenkulturen.

Die erfindungsgemäßen Herbizid-Kombinationen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden. Ebenfalls möglich ist die zeitlich versetzte Anwendung (Splitapplikation) der getrennt formulierten oder partiell getrennt formulierten Einzelkomponenten.
Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die Herbizide (A) und (B) können gemeinsam oder getrennt in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methyicellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.
Die herbizide Wirkung der erfindungsgemäßen Herbizid-Kombinationen kann z.B. gleichemaßen durch oberflächenaktive Substanzen verbessert werden, vorzugsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können nichtionisch vorliegen, oder ionisch, z.B. in Form von Fettalkohol-Polyglykolethersulfaten, vorliegen, die z.B. als Alkalisalze (z.B. Natrium- und Kaliumsalze) oder Ammoniumsalze, oder auch als Erdalkalisalze wie Magnesiumsalze verwendet werden, wie C₁₂/C₁₄-Fettalkohol-diglykolethersulfat-Natrium (Genapol^{®} LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende (C₁₀- C₁₈)-, vorzugsweise (C₁₀-C₁₄)-Fettalkohol-Polyglykolether (z.B. Isotridecylalkohol-Polyglykolether) z.B. aus der Genapol^{®} X-Reihe wie Genapol^{®} X-030, Genapol^{®} X-060, Genapol^{®} X-080 oder Genapol^{®} X-150 (alle von Clariant GmbH).

Die vorliegende Erfindung umfaßt ferner die Kombination von Komponenten A und B mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkohol-polyglykolethersulfate) vorliegen können. Bevorzugt sind C₁₂/C₁₄-Fettalkohol-diglykolethersulfat-Natrium (Genapol^{®} LRO, Clariant GmbH) und Isotridecylalkohol-Polyglykolether, mit 3 - 15 Ethylenoxideneinheiten, z.B. aus der Genapol^{®} X-Reihe wie Genapol^{®} X-030, Genapol^{®} X-060, Genapol^{®} X-080 und Genapol^{®} X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide geeignet sind (siehe z,B. EP-A-0502014).

Weiterhin ist bekannt, daß Fettalkohol-Polyglykolether wie nichtionische oder ionische Fettalkohol-Polyglykolether (z.B. Fettalkohol-Polyglykolethersulfate) auch als Penetrationshilfsmittel und Wirkungsverstärker für eine Reihe anderer Herbizide, geeignet sind (siehe z.B. EP-A-0502014).

Die herbizide Wirkung der erfindungsgemäßen Herbizid-Kombinationen kann auch durch die Verwendung von Pflanzenölen verstärkt werden. Unter dem Begriff Pflanzenöle werden Öle aus ölliefemden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z.B. in Ölen aus ölliefernden Pflanzenarten enthalten sind, oder C₁-C₂₀-Alkyl-C₁₀C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B, beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester, Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester) enthalten sein.

Die vorliegende Erfindung umfasst in einer weiteren Ausführungsform Kombinationen mit den vorgängig genannten Pflanzenölen wie Rapsöl, bevorzugt in Form kommerziell erhältlicher ölhaltiger Formulierungszustzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester).

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 Gew.-%.

Die Herbizide (A) und (B) können als solche oder in ihren Formulierungen auch in Mischung mit anderen agrochemischen Wirkstoffen wie bekannten Herbiziden zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Safenem, Schutzstoffen gegen Vogelfraß, Pflanzennährstoffen und Bodenstrukturverbesserungsmitteln sind möglich.

Die Herbizide (A) und (B) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die Wirkstoffe können auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Anbaufläche (z.B. Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt werden und die erhaltene Spritzbrühe ausgebracht wird.

Eine gemeinsame herbizide Formulierung der erfindungsgemäßen Kombination an Herbiziden (A) und (B) hat den Vorteil der leichteren Anwendbarkeit, wobei die Mengen der Komponenten bereits im optimalen Verhältnis zueinander eingestellt werden können. Außerdem können die Hilfsmittel in der Formulierung aufeinander optimal abgestimmt werden.

Biologische Beispiele

### 1. Unkrautwirkung im Vorauflauf

Samen beziehungsweise Rhizomstücke von mono- und dikotylen Unkrautpflanzen wurden in Papptöpfen in sandiger Lehmerde ausgelegt und mit Erde abgedeckt. Die in Form von benetzbaren Pulvern oder Emulsionskonzentraten formulierten Wirkstoffe (A) und (B) wurden dann als wäßrige Suspensionen bzw, Emulsionen mit einer Wasseraufwandmenge von umgerechnet 100 bis 800 l/ha in unterschiedlichen Dosierungen auf die Oberfläche der Abdeckerde appliziert.

Nach der Behandlung wurden die Töpfe im Gewächshaus aufgestellt und unter guten Wachstumsbedingungen für die Unkräuter gehalten, Die optische Bonitur der Pflanzen- bzw. Auflaufschäden erfolgte nach dem Auflaufen der Versuchspflanzen nach einer Versuchszeit von 3 bis 4 Wochen im Vergleich zu unbehandelten Kontrollen. Wie die Ergebnisse zeigen, weisen die getesteten Herbizid-Kombinationen eine gute herbizide Vorauflaufwirksamkeit gegen ein breites Spektrum von Ungräsem und Unkräutern auf. Die Herbizid-Kombinationen des 2-lodo-N-[(4-methoxy-6-methyl-1,3,5-triazin-2-yl)carbamoyl]benzolsulfonamids und von in Tabelle A genannten Verbindungen der Formel (I) weisen mit Verbindungen der Gruppe B sehr gute synergistische herbizide Wirkung gegen Schadpflanzen wie Sinapis alba, Chrysanthemum segetum, Avena sativa, Stellaria media, Echinochloa crus-galli, Lolium multiflorum, Setaria viridis, Abutilon theophrasti, Amaranthus retroflexus und Panicum miliaceum im Vorauflaufverfahren bei einer Aufwandmenge von 100 g und weniger Aktivsubstanz pro Hektar.

### 2. Unkrautwirkung im Nachauflauf

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im 2-4 Blattstadium behandelt. Die als Spritzpulver bzw. als Emulsionskonzentrate formulierten erfindungsgemäßen Verbindungen wurden in verschiedenen Dosierungen mit einer Wasseraufwandmenge von umgerechnet 100 bis 800 l/ha auf die grünen Pflanzenteile gesprüht. Nach 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert.

Allgemein weisen die erfindungsgemäßen Herbizid-Kombinationen auch im Nachauflauf eine gute herbizide Wirksamkeit gegen ein breites Spektrum wirtschaftlich wichtiger Ungräser und Unkräuter auf. Die Herbizid-Kombinationen des 2-Iodo-N-[(4-methoxy-6-methyl-1,3,5-triazin-2-yl)carbamoyl]benzolsulfonamids und von in Tabelle A genannten Verbindungen der Formel (I) weisen mit Verbindungen der Gruppe B sehr gute synergistische herbizide Wirkung gegen Schadpflanzen wie Sinapis alba, Echinochloa crus-galli, Digitaria sanguinalis, Lolium multiflorum, Chrysanthemum segetum, Setaria viridis, Polygonum convolvulus, Abutilon theophrasti, Amaranthus retroflexus, Panicum miliaceum und Avena sativa im Nachauflaufverfahren bei einer Aufwandmenge von 100 g und weniger Aktivsubstanz pro Hektar.

## Patentansprüche

1. Herbizid-Kombination enthaltend Komponenten (A) und (B), wobei
(A) ein oder mehrere Herbizide aus der Gruppe bestehend aus dem 2-Iodo-N-[(4-methoxy-6-methyl-1,3,5-triazin-2-yl)carbamoyl]benzolsulfonamid und Verbindungen der allgemeinen Formel (I) 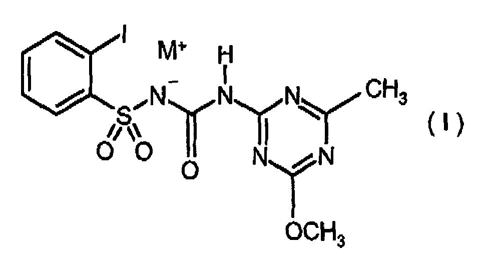 wobei
das Kation (M⁺)
(a) ein Ion der Alkalimetalle, bevorzugt Lithium, Natrium, Kalium, oder
(b) ein Ion der Erdalkalimetalle, bevorzugt Calcium und Magnesium, oder
(c) ein Ion der Übergangsmetalle, bevorzugt Mangan, Kupfer, Zink und Eisen, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-Alkyl, (C₃-C₆)-Cycloalkyl, (C₁-C₄)-Alkoxy-(C₁-C₄)-alkyl, Hydroxy-(C₁-C₄)-alkoxy-(C₁-C₄)-alky), (C₁-C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₆)-Alkyl, (C₁-C₆)-Haloalkyl, (C₃-C₆)-Cycloalkyl, (C₁-C₆)-Alkoxy, (C₁-C₆)-Haloalkoxy und Phenyl substituiert sind und wobei jeweils zwei Substituenten am N-Atom zusammen gegebenfalls einen unsubstituierten oder substituierten Ring bilden, oder
(e) ein Phosphonium-Ion, oder
(f) ein Sulfonium-Ion, bevorzugt Tri-((C₁-C₄)-alkyl)-sulfonium, oder
(g) ein Oxonium-Ion, bevorzugt Tri-((C₁-C₄)-alkyl)-oxonium, oder
(h) eine gegebenenfalls einfach oder mehrfach annellierte und/oder durch (C₁-C₄)-Alkyl substituierte gesättigte oder ungesättigte/aromatische N-haltige heterocyclische ionische Verbindung mit 1-10 C-Atomen im Ringsystem
ist,
bedeutet, und
(B) ein oder mehrere Herbizide aus der Gruppe der Azole bestehend aus:
benzofenap, pyrazolynate, pyrazoxyfen, pyroxasulfone, topramezone, pyrasulfutole, NC-310, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethy)-1H-pyrazole, pyraflufen-ethyl, fluazolate, isouron, isoxaben, isoxaflutole, imazamethabenzmethyl, imazamox, imazapic, imazapyr, imazaquin, imazethapyr, methazole, oxadiargyl, oxadiazon, amicarbazone, carfentrazone-ethyl, sulfentrazone, bencarbazone, amitrole, paclobutrazol, uniconazole, cafenstrole, fentrazamide und F-5231
bedeutet.

2. Herbizid-Kombination nach Anspruch 1, **dadurch gekennzeichnet, dass** als Komponente (A)
2-Iodo-N-[(4-methoxy-6-methy)-1,3,5-triazin-2-yl)carbamoyl]benzolsulfonamid und/oder Verbindungen der Formel (I), in denen das Kation (M⁺)
(a) ein Ion der Alkalimetalle, bevorzugt Lithium, Natrium, Kalium, oder
(b) ein Ion der Erdalkalimetalle, bevorzugt Calcium und Magnesium, oder
(c) ein Ion der Übergangsmetalle, bevorzugt Mangan, Kupfer, Zink und Eisen, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-Alky), (C₃-C₄)-Cycloalkyl, (C₁-C₂)-Alkoxy-(C₁-C₂)-alkyl, Hydroxy-(C₁-C₂)-alkoxy-(C₁-C₂)-alkyl, (C₁-C₂)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₂)-Alkyl, (C₁-C₂)-Haloalkyl, (C₃-C₄)-Cycloalkyl, (C₁-C₂)-Alkoxy, (C₁-C₂)-Haloalkoxy und Phenyl substituiert sind und wobei jeweils zwei Substituenten am N-Atom zusammen gegebenfalls einen unsubstituierten oder substituierten Ring bilden, oder
(e) ein quartäres Phosphonium-Ion, bevorzugt Tetra-((C₁-C₄)-alkyl)-phosphonium und Tetraphenyl-phosponium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(f) ein tertiäres Sulfonium-Ion, bevorzugt Tri-((C₁-C₄)-alkyl)-sulfonium oder Triphenyl-sulfonium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(g) ein tertiäres Oxonium-Ion, bevorzugt Tri-((C₁-C₄)-alkyl)-oxonium, wobei die (C₁-C₄)-Alkylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(h) ein Kation aus der Reihe der folgenden heterocyclischen Verbindungen, wie beispielsweise Pyridin, Chinolin, 2-Methylpyridin, 3-Methylpyridin, 4-Methylpyridin, 2,4-Dimethylpyridin, 2,5-Dimethylpyridin, 2,6-Dimethylpyridin, 5-Ethyl-2-methylpyridin, Piperidin, Pyrrolidin, Morpholin, Thiomorpholin, Pyrrol, Imidazol, 1,5-Diazabicyclo[4.3.0]non-5-en (DBN), 1,8-Diazabicyclo[5,4,0]undec-7-en (DBU)
ist,
enthalten ist oder enthalten sind.

3. Herbizid-Kombination nach Anspruch 1, **dadurch gekennzeichnet, dass** als Komponente (A) das 2-Iodo-N-[(4-methoxy-6-methyl-1,3,5-triazin-2-yl)carbamoyl]benzolsulfonamid und/oder Verbindungen der Formel (I), in denen das Kation (M⁺)
ein Natrium-Ion, ein Kalium-Ion, ein Lithium-Ion, ein Magnesium-Ion, ein Calcium-Ion, ein NH₄⁺-Ion, ein (2-Hydroxyeth-1-yl)ammonium-Ion, Bis-N,N-(2-hydroxyeth-1-yl)ammonium-Ion, Tris-N,N,N-(2-hydroxyeth-1-yl)ammonium-Ion, ein Methylammonium-Ion, ein Dimethylammonium-Ion, ein Trimethylammonium-Ion, ein Tetramethylammonium-Ion ein Ethylammonium-Ion, ein Diethylammonium-Ion, ein Triethylammonium-Ion, ein
Tretraethylammonium-Ion ein Isopropylammonium-Ion, ein Diisopropylammonium-Ion, ein Tetrapropylammonium-Ion, ein Tetrabutylammonium-Ion, ein 2-(2-Hydroxyeth-1-oxy)eth-1-yl-ammonium-Ion, ein Di-(2-hydroxyeth-1-yl)-ammonium-Ion, ein Trimethylbenzylammonium-Ion, ein Tri-((C₁-C₄)-alkyl)-sulfonium-Ion, oder ein Tri-((C₁-C₄)-alkyl)-oxonium-Ion, ein Benzylammonium-Ion, ein 1-Phenylethylammonium-Ion, ein 2-Phenylethylammonium-Ion, ein Diisopropylethylammonium-Ion, ein Pyridinium-Ion, ein Piperdinium-Ion, ein Imidazolium-Ion, ein Morpholinium-Ion, ein 1,8-Diazabicyclo[5,4.0]undec-7-enium-Ion ist,
enthalten ist oder enthalten sind.

4. Herbizid-Kombination nach einem der Ansprüche 1 bis 3, **dadurch gekennzeichnet, dass** als Komponente (B) eine oder mehrere der Verbindungen aus der nachfolgend genannten Gruppe bestehend aus:
Benzofenap, topramezone, pyrasulfutole, isoxaflutole, imazamox, imazethapyr, oxadiargyl, oxadiazon, amicarbazone, carfentrazone-ethyl, sulfentrazone, uniconazole, cafenstrole, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole enthalten ist oder enthalten sind.

5. Herbizid-Kombination nach einem der Ansprüche 1 bis 4, enthaltend einen wirksamen Gehalt an Komponenten (A) und (B) und/oder eine oder mehrere weitere Komponenten aus der Gruppe agrochemischer Wirkstoffe anderer Art, im Pflanzenschutz übliche Zusatzstoffe und Formulierungshilfsmittel.

6. Verfahren zur selektiven Bekämpfung von unerwünschtem Pflanzenwuchs, worin die Herbizide (A) und (B) der Herbizid-Kombination, definiert gemäß einem oder mehreren der Ansprüche 1 bis 5, gemeinsam oder getrennt appliziert werden, vorzugsweise auf die Fläche auf der die Pflanzen wachsen.

7. Verfahren nach Anspruch 6 zur selektiven Bekämpfung von unerwünschtem Pflanzenwuchs im Vorauflauf oder im Nachauflauf in Weizen (Hart- und Weichweizen), Mais, Soja, Zuckerrübe, Zuckerrohr Baumwolle, Reis, Bohnen, Flachs, Gerste, Hafer, Roggen, Triticale, Raps, Raps, Kartoffel und Hirse (Sorghum), Flachs, Weideland und Grün-/Rasenflächen

8. Verwendung der nach einem der Ansprüche 1 bis 5 definierten Herbizid-Kombination zur selektiven Bekämpfung von unerwünschtem Pflanzenwuchs.
